(19) Europäisches Patentamt
European Patent Office
Office européen des brevets

(11) **EP 4 350 813 A1**

(12) **EUROPEAN PATENT APPLICATION**
published in accordance with Art. 153(4) EPC

(43) Date of publication:
**10.04.2024 Bulletin 2024/15**

(21) Application number: **22811206.6**

(22) Date of filing: **17.05.2022**

(51) International Patent Classification (IPC):
*H01M 4/62* (2006.01)        *H01M 4/13* (2010.01)
*H01M 4/139* (2010.01)       *H01M 10/0562* (2010.01)
*H01M 10/0585* (2010.01)

(52) Cooperative Patent Classification (CPC):
**H01M 4/13; H01M 4/139; H01M 4/62;
H01M 10/0562; H01M 10/0585;** Y02E 60/10

(86) International application number:
**PCT/JP2022/020568**

(87) International publication number:
**WO 2022/249933 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.05.2021 JP 2021089296**

(71) Applicant: **Zeon Corporation
Tokyo 100-8246 (JP)**

(72) Inventor: **MATSUO, Yusaku
Tokyo 100-8246 (JP)**

(74) Representative: **Maiwald GmbH
Engineering
Elisenhof
Elisenstrasse 3
80335 München (DE)**

(54) **BINDER COMPOSITION FOR ALL-SOLID-STATE SECONDARY BATTERIES, SLURRY
COMPOSITION FOR ALL-SOLID-STATE SECONDARY BATTERIES, FUNCTIONAL LAYER
FOR ALL-SOLID-STATE SECONDARY BATTERIES, AND ALL-SOLID-STATE SECONDARY
BATTERY**

(57)     Provided is a binder composition for an all-solid-state secondary battery that is capable of producing a slurry composition for an all-solid-state secondary battery having excellent dispersibility and that can cause a functional layer for an all-solid-state secondary battery to display excellent adhesiveness. The binder composition contains a binder and a solvent. The binder includes a polymer A, and this polymer A includes a nitrile group-containing monomer unit and a hydroxy group-containing monomer unit. In the polymer A, the proportional content of the nitrile group-containing monomer unit is not less than 3 mass% and not more than 30 mass%, and a molar ratio of the proportional content of the hydroxy group-containing monomer unit relative to the proportional content of the nitrile group-containing monomer unit is not less than 0.01 and not more than 0.30.

**EP 4 350 813 A1**

**Description**

TECHNICAL FIELD

The present disclosure relates to a binder composition for an all-solid-state secondary battery, a slurry composition for an all-solid-state secondary battery, a functional layer for an all-solid-state secondary battery, and an all-solid-state secondary battery.

BACKGROUND

Demand for secondary batteries such as lithium ion secondary batteries has been increasing in recent years for various applications such as mobile information terminals, mobile electronic devices, and other mobile terminals, and also domestic small power storage devices, motorcycles, electric vehicles, and hybrid electric vehicles. This expansion of applications of secondary batteries has been accompanied by demand for further improvement of secondary battery safety.

All-solid-state secondary batteries in which solid electrolyte particles are used instead of an organic solvent electrolyte having high flammability and high risk of catching fire upon leakage are attracting interest as secondary batteries having high safety.

A binder composition for an all-solid-state secondary battery (hereinafter, also referred to simply as a "binder composition") that contains a polymer as a binder and a solvent may be used in production of a battery member of an all-solid-state secondary battery. Specifically, the binder composition may be mixed with functional particles (electrode active material particles, solid electrolyte particles, conductive material particles, etc.) to produce a slurry composition for an all-solid-state secondary battery (hereinafter, also referred to simply as a "slurry composition"), for example. Next, the solvent may be removed from the slurry composition so as to form a functional layer (electrode mixed material layer, solid electrolyte layer, etc.) in which components such as the functional particles are bound to one another through the binder. This functional layer can then be used as a battery member of an all-solid-state secondary battery or as part of such a battery member.

Improvements have been made to polymers used as binders and binder compositions containing such polymers with the aim of improving the performance of all-solid-state secondary batteries (for example, refer to Patent Literature (PTL) 1 to 3).

CITATION LIST

Patent Literature

PTL 1: WO2020/203042A1
PTL 2: WO2020/045227A1
PTL 3: JP2015-88486A

SUMMARY

(Technical Problem)

However, there is room for improvement of a conventional binder composition such as described above in terms of improving dispersibility of a slurry composition and increasing adhesiveness of a functional layer.

Accordingly, one object of the present disclosure is to provide a binder composition for an all-solid-state secondary battery that is capable of producing a slurry composition for an all-solid-state secondary battery having excellent dispersibility and that can cause a functional layer for an all-solid-state secondary battery to display excellent adhesiveness.

Another object of the present disclosure is to provide a slurry composition for an all-solid-state secondary battery that has excellent dispersibility and is capable of forming a functional layer for an all-solid-state secondary battery having excellent adhesiveness.

Yet another object of the present disclosure is to provide a functional layer for an all-solid-state secondary battery that has excellent adhesiveness and an all-solid-state secondary battery that includes this functional layer for an all-solid-state secondary battery.

(Solution to Problem)

The inventor conducted diligent investigation with the aim of solving the problem set forth above. The inventor discovered that by using a polymer having a specific chemical composition as a binder contained in a binder composition, it is possible to sufficiently ensure dispersibility of a slurry composition while also causing a functional layer to display excellent adhesiveness, and, in this manner, completed the present disclosure.

Specifically, the present disclosure aims to advantageously solve the problem set forth above and provides binder compositions for an all-solid-state secondary battery according to the following (1) to (3), slurry compositions for an all-solid-state secondary battery according to the following (4) and (5), a functional layer for an all-solid-state secondary battery according to the following (6), and an all-solid-state secondary battery according to the following (7).

(1) A binder composition for an all-solid-state secondary battery comprising a binder and a solvent, wherein the binder includes a polymer A, the polymer A includes a nitrile group-containing monomer unit and a hydroxy group-containing monomer unit, and in the polymer A, proportional content of the nitrile group-containing monomer unit is not less than 3 mass% and not more than 30 mass%, and a molar ratio of proportional content of the hydroxy group-containing monomer unit relative to the proportional content of the nitrile group-containing monomer unit is not less than 0.01 and not more than 0.30.

By using a binder composition that contains a solvent and a polymer A in which the proportional content of nitrile group-containing monomer units and the molar ratio of the proportional content of hydroxy group-containing monomer units relative to the proportional content of nitrile group-containing monomer units (hereinafter, also referred to simply as the "hydroxy group/nitrile group molar ratio") are within the ranges set forth above in this manner, it is possible to produce a slurry composition having excellent dispersibility and to form a functional layer having excellent adhesiveness from this slurry composition.

Note that a "monomer unit" of a polymer referred to in the present disclosure is a "repeating unit derived from the monomer that is included in a polymer obtained using the monomer".

Also note that the "proportional content (mass%)" of each monomer unit (each repeating unit) included in a polymer that is referred to in the present disclosure can be measured by a nuclear magnetic resonance (NMR) method such as $^1$H-NMR or $^{13}$C-NMR.

Furthermore, the "hydroxy group/nitrile group molar ratio" referred to in the present disclosure can be calculated based on measured values obtained by measuring the proportional content (mol%) of nitrile group-containing monomer units and the proportional content (mol%) of hydroxy group-containing monomer units by a nuclear magnetic resonance (NMR) method such as $^1$H-NMR or $^{13}$C-NMR.

(2) The binder composition for an all-solid-state secondary battery according to the foregoing (1), wherein the polymer A further includes a (meth)acrylic acid ester monomer unit in a proportion of not less than 25 mass% and not more than 95 mass%.

When the proportional content of (meth)acrylic acid ester monomer units in the polymer A is within the range set forth above in this manner, appropriate flexibility can be imparted to a functional layer while also enhancing cycle characteristics of an all-solid-state secondary battery.

Note that in the present disclosure, "(meth)acryl" is used to indicate "acryl" and/or "methacryl".

(3) The binder composition for an all-solid-state secondary battery according to the foregoing (1) or (2), wherein the solvent includes one or more selected from the group consisting of an aromatic hydrocarbon, a ketone, an ester, and an ether.

When the solvent includes one or more selected from the group consisting of an aromatic hydrocarbon, a ketone, an ester, and an ether in this manner, dispersibility of a slurry composition can be further improved while also even further increasing adhesiveness of a functional layer. Moreover, cell characteristics of an all-solid-state secondary battery can be enhanced (i.e., IV resistance of an all-solid-state secondary battery can be reduced while also enhancing cycle characteristics of the all-solid-state secondary battery).

(4) A slurry composition for an all-solid-state secondary battery comprising: functional particles; and the binder composition for an all-solid-state secondary battery according to any one of the foregoing (1) to (3).

A slurry composition that contains functional particles and the binder composition according to any one of the foregoing (1) to (3) in this manner has excellent dispersibility and can be used to form a functional layer having excellent adhesiveness.

(5) The slurry composition for an all-solid-state secondary battery according to the foregoing (4), wherein the functional particles are one or more selected from the group consisting of electrode active material particles, solid electrolyte particles, and conductive material particles.

(6) A functional layer for an all-solid-state secondary battery formed using the slurry composition for an all-solid-state secondary battery according to the foregoing (4) or (5).

A functional layer that is formed using the slurry composition according to the foregoing (4) or (5) in this manner has excellent adhesiveness.

(7) An all-solid-state secondary battery comprising the functional layer for an all-solid-state secondary battery according to the foregoing (6).

An all-solid-state secondary battery that includes the functional layer for an all-solid-state secondary battery according to the foregoing (6) in this manner has excellent cell characteristics.

(Advantageous Effect)

According to the present disclosure, it is possible to provide a binder composition for an all-solid-state secondary battery that is capable of producing a slurry composition for an all-solid-state secondary battery having excellent dispersibility and that can cause a functional layer for an all-solid-state secondary battery to display excellent adhesiveness.

Moreover, according to the present disclosure, it is possible to provide a slurry composition for an all-solid-state secondary battery that has excellent dispersibility and is capable of forming a functional layer for an all-solid-state secondary battery having excellent adhesiveness.

Furthermore, according to the present disclosure, it is possible to provide a functional layer for an all-solid-state secondary battery that has excellent adhesiveness and an all-solid-state secondary battery that includes this functional layer for an all-solid-state secondary battery.

DETAILED DESCRIPTION

The following provides a detailed description of embodiments of the present disclosure.

A presently disclosed binder composition for an all-solid-state secondary battery is used in production of an all-solid-state secondary battery. For example, the presently disclosed binder composition for an all-solid-state secondary battery can be used in formation of a functional layer for an all-solid-state secondary battery (for example, a solid electrolyte layer that contains solid electrolyte particles or an electrode mixed material layer that contains electrode active material particles and optionally contains solid electrolyte particles and/or conductive material particles) that is a constituent of a battery member of an all-solid-state secondary battery. A presently disclosed slurry composition for an all-solid-state secondary battery is a slurry composition that contains the presently disclosed binder composition for an all-solid-state secondary battery and can be used in formation of a functional layer for an all-solid-state secondary battery. Moreover, a presently disclosed functional layer for an all-solid-state secondary battery is formed using the presently disclosed slurry composition for an all-solid-state secondary battery. Furthermore, a presently disclosed all-solid-state secondary battery includes the presently disclosed functional layer for an all-solid-state secondary battery.

(Binder composition for all-solid-state secondary battery)

The presently disclosed binder composition contains a solvent and a binder that includes a polymer A and can optionally further contain other components.

Features of the presently disclosed binder composition are that the aforementioned polymer A includes a nitrile group-containing monomer unit and a hydroxy group-containing monomer unit, the proportional content of nitrile group-containing monomer units in the polymer A is not less than 3 mass% and not more than 30 mass%, and the hydroxy group/nitrile group molar ratio in the polymer A is not less than 0.01 and not more than 0.30.

As a result of the presently disclosed binder composition containing a polymer A that includes a nitrile group-containing monomer unit and a hydroxy group-containing monomer unit as a binder in a solvent and as a result of the proportional content of the aforementioned nitrile group-containing monomer unit and the hydroxy group/nitrile group molar ratio being within the ranges set forth above, it is possible to provide a slurry composition having excellent dispersibility and a functional layer having excellent adhesiveness by using this binder composition. Although it is not certain why the effects described above are obtained by using a binder composition that contains a polymer A having a proportional content of nitrile group-containing monomer units and a hydroxy group/nitrile group molar ratio that are within the ranges set forth above in this manner, the reason for this is presumed to be as follows.

First, the polymer A that is contained in the binder composition includes a nitrile group-containing monomer unit in a specific proportion. This nitrile group-containing monomer unit is thought to enable improvement of dispersibility of a slurry composition by interacting with functional particles.

Moreover, the polymer A that is contained in the binder composition also includes a hydroxy group-containing monomer unit. This hydroxy group-containing monomer unit is thought to enable increased close adherence of a functional layer by interacting with a substrate (current collector, electrode, etc.).

Furthermore, the polymer A that is contained in the binder composition has a hydroxy group/nitrile group molar ratio that is within the range set forth above. In a situation in which this molar ratio is less than a specific lower limit, hydroxy groups in the polymer A are used in interactions between the polymer A and functional particles, and interactions between the polymer A and a substrate decrease. This is thought to result in reduction of adhesiveness of a functional layer. On the other hand, in a situation in which this molar ratio is more than a specific upper limit, hydroxy groups and nitrile groups in the polymer A interact with one another, and the polymer A has a lower tendency to interact with functional particles and a substrate. This is thought to result in reduction of dispersibility of a slurry composition and adhesiveness of a functional layer. As a result of the polymer A that is contained in the presently disclosed binder composition having a hydroxy group/nitrile group molar ratio that is within the range set forth above, reduction of dispersibility of a slurry composition and adhesiveness of a functional layer through mechanisms such as set forth above does not occur.

Consequently, a slurry composition having excellent dispersibility can be obtained by using the presently disclosed binder composition. Moreover, a functional layer that is formed using the presently disclosed slurry composition has excellent adhesiveness.

<Binder>

In a functional layer formed from a slurry composition that is produced using the binder composition, the binder binds components such as functional particles to one another while also adhering the functional layer formed of these components to a substrate.

The presently disclosed binder composition contains at least a polymer A as the binder and optionally contains a polymer (polymer B) other than the polymer A as the binder.

«Polymer A»

The polymer A includes at least a nitrile group-containing monomer unit and a hydroxy group-containing monomer unit and can optionally further include a (meth)acrylic acid ester monomer unit. Note that the polymer A may include structural units other than a nitrile group-containing monomer unit, a hydroxy group-containing monomer unit, and a (meth)acrylic acid ester monomer unit (i.e., other structural units).

Also note that in the case of a (meth)acrylic acid ester monomer unit that includes a hydroxy group, this monomer unit is considered to be included among "hydroxy group-containing monomer units" and not be included among "(meth)acrylic acid ester monomer units" in the present disclosure.

The presently disclosed binder composition may include just one type of polymer A or may include two or more types of polymers A.

[Nitrile group-containing monomer unit]

Examples of nitrile group-containing monomers that can form a nitrile group-containing monomer unit of the polymer A include acrylonitrile; α-halogenoacrylonitriles such as α-chloroacrylonitrile and α-bromoacrylonitrile; and α-alkylacrylonitriles such as methacrylonitrile and α-ethylacrylonitrile. Of these nitrile group-containing monomers, acrylonitrile is preferable.

Note that one nitrile group-containing monomer may be used individually, or two or more nitrile group-containing monomers may be used in combination.

The proportion constituted by nitrile group-containing monomer units among all structural units included in the polymer A when all structural units are taken to be 100 mass% is required to be not less than 3 mass% and not more than 30 mass%, is preferably 4 mass% or more, and more preferably 5 mass% or more, and is preferably 25 mass% or less, more preferably 23 mass% or less, and even more preferably 20 mass% or less. When the proportion constituted by nitrile group-containing monomer units among all structural units of the polymer A is less than 3 mass%, the polymer A cannot sufficiently adsorb to functional particles and cannot cause good dispersion of the functional particles in a slurry composition. As a consequence, dispersibility of the slurry composition decreases. On the other hand, when the proportion constituted by nitrile group-containing monomer units among all structural units of the polymer A is more than 30 mass%, solubility of the polymer A in a solvent contained in a slurry composition decreases, and dispersibility of the slurry composition decreases. Moreover, when the proportion constituted by nitrile group-containing monomer units among all structural units of the polymer A is not less than 3 mass% and not more than 30 mass%, a slurry composition having excellent dispersibility can be produced while also increasing adhesiveness of a functional layer. In addition, cell characteristics of an all-solid-state secondary battery can be improved.

[Hydroxy group-containing monomer unit]

Examples of hydroxy group-containing monomers that can form a hydroxy group-containing monomer unit of the polymer A include hydroxy group containing (meth)acrylamide monomers such as N-hydroxymethylacrylamide, N-hydroxyethylacrylamide, N-hydroxypropyl acrylamide, N-hydroxymethylmethacrylamide, N-hydroxyethylmethacrylamide, and N-hydroxypropylmethacrylamide; and hydroxy group-containing (meth)acrylate monomers such as 2-hydroxymethyl acrylate, 2-hydroxyethyl acrylate, 2-hydroxypropyl acrylate, 2-hydroxybutyl acrylate, 4-hydroxybutyl acrylate, 1,4-cyclohexanedimethanol monoacrylate, 3-hydroxy-1-adamantyl acrylate, 2-hydroxymethyl methacrylate, 2-hydroxyethyl methacrylate, 2-hydroxypropyl methacrylate, and 2-hydroxybutyl methacrylate. Of these hydroxy group-containing monomers, hydroxy group-containing (meth)acrylate monomers are preferable from a viewpoint of even further increasing adhesiveness of a functional layer while also enhancing cycle characteristics of an all-solid-state secondary battery, 2-hydroxyethyl acrylate, 4-hydroxybutyl acrylate, 1,4-cyclohexanedimethanol monoacrylate, 3-hydroxy-1-adamantyl acrylate, 2-hydroxyethyl methacrylate, and 2-hydroxypropyl methacrylate are more preferable, and 2-hydroxyethyl acrylate, 2-hydroxyethyl methacrylate, and 1,4-cyclohexanedimethanol monoacrylate are even more preferable.

Note that one hydroxy group-containing monomer may be used individually, or two or more hydroxy group-containing monomers may be used in combination.

Also note that in the present disclosure, "(meth)acrylate" is used to indicate "acrylate" and/or "methacrylate".

The proportion constituted by hydroxy group-containing monomer units among all structural units included in the polymer A when all structural units are taken to be 100 mass% is preferably 0.1 mass% or more, more preferably 0.3 mass% or more, even more preferably 0.5 mass% or more, further preferably 1 mass% or more, and particularly preferably 1.5 mass% or more, and is preferably 10 mass% or less, more preferably 5 mass% or less, and even more preferably 2.5 mass% or less. When the proportion constituted by hydroxy group-containing monomer units among all structural units of the polymer A is 0.1 mass% or more, adhesiveness of a functional layer can be even further increased while also enhancing cycle characteristics of an all-solid-state secondary battery. On the other hand, when the proportion constituted by hydroxy group-containing monomer units among all structural units of the polymer A is 10 mass% or less, good solubility of the polymer A in a solvent contained in a slurry composition can be ensured, and dispersibility of the slurry composition can be further improved. In addition, cell characteristics of an all-solid-state secondary battery can be improved.

[Hydroxy group/nitrile group molar ratio]

A molar ratio of the proportional content of hydroxy group-containing monomer units relative to the proportional content of nitrile group-containing monomer units (hydroxy group/nitrile group molar ratio) in the polymer A is required to be not less than 0.01 and not more than 0.30, is preferably 0.015 or more, and more preferably 0.02 or more, and is preferably 0.25 or less, more preferably 0.23 or less, and even more preferably 0.21 or less. When the hydroxy group/nitrile group molar ratio is less than 0.01, adhesiveness of a functional layer decreases. On the other hand, when the hydroxy group/nitrile group molar ratio is more than 0.30, dispersibility of a slurry composition and adhesiveness of a functional layer decrease. In other words, a slurry composition having excellent dispersibility can be produced while also increasing adhesiveness of a functional layer when the hydroxy group/nitrile group molar ratio is not less than 0.01 and not more than 0.30. In addition, cell characteristics of an all-solid-state secondary battery can be improved.

[(Meth)acrylic acid ester monomer unit]

Examples of (meth)acrylic acid ester monomers that can form a (meth)acrylic acid ester monomer unit of the polymer A include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, nonyl acrylate, decyl acrylate, lauryl acrylate, n-tetradecyl acrylate, stearyl acrylate, 2-ethylhexyl acrylate, and cyclohexyl acrylate; acrylic acid alkoxy esters such as 2-methoxyethyl acrylate and 2-ethoxyethyl acrylate; 2-(perfluoroalkyl)ethyl acrylates such as 2-(perfluorobutyl)ethyl acrylate and 2-(perfluoropentyl)ethyl acrylate; methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, nonyl methacrylate, decyl methacrylate, lauryl methacrylate tridecyl methacrylate, n-tetradecyl methacrylate, stearyl methacrylate, 2-ethylhexyl methacrylate, and cyclohexyl methacrylate; methacrylic acid alkoxy esters such as 2-methoxyethyl methacrylate and 2-ethoxyethyl methacrylate; and 2-(perfluoroalkyl)ethyl methacrylates such as 2-(perfluorobutyl)ethyl methacrylate and 2-(perfluoropentyl)ethyl methacrylate. One of these (meth)acrylic acid ester monomers may be used individually, or two or more of these (meth)acrylic acid ester monomers may be used in combination.

The (meth)acrylic acid ester monomer is preferably a (meth)acrylic acid alkyl ester monomer in which the number of carbon atoms forming an alkyl group bonded to a non-carbonyl oxygen atom is not less than 4 and not more than 8 (hereinafter, also referred to simply as a "C4-C8 (meth)acrylic acid alkyl ester monomer"). By using a (meth)acrylic acid ester monomer in which the number of carbon atoms forming an alkyl group bonded to a non-carbonyl oxygen atom is 4 or more, appropriate flexibility can be imparted to a functional layer. On the other hand, by using a (meth)acrylic acid ester monomer in which the number of carbon atoms forming an alkyl group bonded to a non-carbonyl oxygen atom is 8 or less, good copolymerizability with other monomers can be ensured. The C4-C8 (meth)acrylic acid alkyl ester monomer is preferably n-butyl acrylate, 2-ethylhexyl acrylate, or ethyl acrylate, for example.

The proportion constituted by (meth)acrylic acid ester monomer units among all structural units included in the polymer A when all structural units are taken to be 100 mass% is preferably 25 mass% or more, more preferably 27.5 mass% or more, and even more preferably 30 mass% or more, and is preferably 95 mass% or less, more preferably 92.5 mass% or less, and even more preferably 90 mass% or less. When the proportion constituted by (meth)acrylic acid ester monomer units among all structural units of the polymer A is 25 mass% or more, appropriate flexibility can be imparted to a functional layer. On the other hand, when the proportion constituted by (meth)acrylic acid ester monomer units among all structural units of the polymer A is 95 mass% or less, cycle characteristics of an all-solid-state secondary battery can be enhanced.

[Other structural units]

No specific limitations are placed on other structural units. Examples of other structural units include an aromatic vinyl monomer unit, a conjugated diene monomer unit, a cross-linkable monomer unit, and an acid group-containing monomer unit. Note that the polymer A may include just one type of other structural unit or may include two or more types of other structural units.

-Aromatic vinyl monomer unit-

Examples of aromatic vinyl monomers that can form an aromatic vinyl monomer unit include styrene, $\alpha$-methylstyrene, p-t-butylstyrene, butoxystyrene, vinyltoluene, chlorostyrene, and vinylnaphthalene. One of these aromatic vinyl monomers may be used individually, or two or more of these aromatic vinyl monomers may be used in combination. Of these aromatic vinyl monomers, styrene is preferable.

-Conjugated diene monomer unit-

Examples of conjugated diene monomers that can form a conjugated diene monomer unit include aliphatic conjugated diene monomers such as 1,3-butadiene, isoprene, 2,3-dimethyl-1,3-butadiene, and 1,3-pentadiene. One of these conjugated diene monomers may be used individually, or two or more of these conjugated diene monomers may be used in combination.

Note that the term "conjugated diene monomer unit" as used in the present disclosure is inclusive of a structural unit (hydrogenated unit) obtained through further hydrogenation of a monomer unit included in a polymer that is obtained using a conjugated diene monomer.

Of the conjugated diene monomers described above, 1,3-butadiene is preferable. In other words, a 1,3-butadiene unit and a hydrogenated 1,3-butadiene unit are preferable as conjugated diene monomer units.

-Cross-linkable monomer unit-

A cross-linkable monomer that can form a cross-linkable monomer unit is a monomer that includes two or more polymerizable structures (olefinic double bonds, epoxy groups, etc.) per one molecule. Examples of cross-linkable monomers include allyl (meth)acrylate, allyl glycidyl ether, ethylene glycol di(meth)acrylate, and glycidyl methacrylate. One of these cross-linkable monomers may be used individually, or two or more of these cross-linkable monomers may be used in combination. Of these cross-linkable monomers, allyl methacrylate is preferable.

-Acid group-containing monomer unit-

Examples of acid group-containing monomers that can form an acid group-containing monomer unit include carboxy group-containing monomers, sulfo group-containing monomers, and phosphate group-containing monomers. Note that an acid group included in an acid group-containing monomer unit may form a salt with an alkali metal, ammonia, or the like.

Examples of carboxy group-containing monomers that can form a carboxy group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, $\alpha$-acetoxyacrylic acid, $\beta$-trans-aryloxyacrylic acid, and $\alpha$-chloro-$\beta$-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

An acid anhydride that produces a carboxy group through hydrolysis can also be used as a carboxy group-containing monomer.

Examples of sulfo group-containing monomers that can form a sulfo group-containing monomer unit include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers that can form a phosphate group-containing monomer unit include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

One of the acid group-containing monomers described above may be used individually, or two or more of the acid group-containing monomers described above may be used in combination.

In a case in which the polymer A includes other structural units, the proportion constituted by other structural units among all structural units included in the polymer A when all structural units are taken to be 100 mass% is preferably 50 mass% or less, more preferably 40 mass% or less, even more preferably 30 mass% or less, and particularly preferably 20 mass% or less.

[Weight-average molecular weight]

The weight-average molecular weight (Mw) of the polymer A that is contained in the presently disclosed binder composition is preferably 10,000 or more, more preferably 100,000 or more, and even more preferably 800,000 or more, and is preferably 3,000,000 or less, more preferably 2,500,000 or less, even more preferably 2,000,000 or less, and particularly preferably 1,400,000 or less. When the weight-average molecular weight (Mw) of the polymer A is 10,000 or more, adhesiveness of a functional layer can be even further increased while also enhancing cycle characteristics of an all-solid-state secondary battery. On the other hand, when the weight-average molecular weight (Mw) of the polymer A is 3,000,000 or less, dispersibility of a slurry composition can be further improved.

Note that the "weight-average molecular weight" of a polymer referred to in the present disclosure can be measured as a standard polystyrene-equivalent value by gel permeation chromatography (GPC).

[Molecular weight distribution]

The molecular weight distribution (Mw/Mn) of the polymer A is preferably 1.5 or more, more preferably 2.0 or more, even more preferably 2.5 or more, and particularly preferably 3.1 or more, and is preferably 5.5 or less, more preferably 5.0 or less, even more preferably 4.5 or less, and particularly preferably 4.0 or less. When the molecular weight distribution (Mw/Mn) of the polymer A is not less than 1.5 and not more than 5.5, dispersibility of a slurry composition can be further improved while also even further increasing adhesiveness of a functional layer.

Note that the "molecular weight distribution" of a polymer referred to in the present disclosure can be determined by calculating a ratio (Mw/Mn) of the weight-average molecular weight (Mw) relative to the number-average molecular weight (Mn) of the polymer. Also note that the "number-average molecular weight" and "weight-average molecular weight" referred to in the present disclosure can be measured as standard polystyrene-equivalent values by gel permeation chromatography.

[Solubility]

The polymer A may have good solubility or poor solubility in the solvent contained in the binder composition and slurry composition. In other words, the polymer A may be dissolved in the solvent or may be dispersed in the solvent in a particulate form in the binder composition and slurry composition.

Note that when a polymer is said to have "good solubility in a solvent" in the present disclosure, this means that the amount of solvent-insoluble content is less than 50 mass%, and when a polymer is said to have "poor solubility in a solvent" in the present disclosure, this means that the amount of solvent-insoluble content is 50 mass% or more.

Also note that the "amount of solvent-insoluble content" referred to in the present disclosure can be measured by a method described in the EXAMPLES section. Moreover, the "amount of solvent-insoluble content" in a polymer can be adjusted by altering the types and amounts of monomers used to produce the polymer, the weight-average molecular weight of the polymer, and so forth. For example, the amount of solvent-insoluble content in a polymer can be reduced by reducing the amount of cross-linkable monomer units used in production of the polymer.

A polymer A that has good solubility in the solvent is preferable as the polymer A from a viewpoint of further improving dispersibility of a slurry composition while also even further increasing adhesiveness of a functional layer and enhancing cell characteristics of an all-solid-state secondary battery. Moreover, in a case in which a polymer A that has good solubility in the solvent is used, it is preferable that a polymer A having poor solubility in the solvent is used in combination therewith as the polymer A. By using a polymer A having good solubility in the solvent and a polymer A having poor solubility in the solvent in combination, it is possible to even further increase adhesiveness of a functional layer and to enhance cell characteristics of an all-solid-state secondary battery.

In a case in which a polymer A having good solubility in the solvent and a polymer A having poor solubility in the solvent are used in combination, the proportion constituted by the polymer A having good solubility among the total amount of the polymer A having good solubility and the polymer A having poor solubility is preferably 30 mass% or more, more preferably 40 mass% or more, and even more preferably 50 mass% or more, and is preferably 90 mass% or less, more preferably 80 mass% or less, and even more preferably 70 mass% or less. When the proportion constituted by the polymer A having good solubility among the total amount (100 mass%) of the polymer A having good solubility and the polymer A having poor solubility is not less than 30 mass% and not more than 90 mass%, adhesiveness of a functional layer can be even further increased, and cell characteristics of an all-solid-state secondary battery can be enhanced.

In a case in which the polymer A has good solubility in the solvent, the proportion constituted by cross-linkable monomer units among all structural units included in the polymer A when all structural units are taken to be 100 mass% is preferably 0.3 mass% or less, more preferably 0.2 mass% or less, even more preferably 0.1 mass% or less, and particularly preferably 0 mass%. When the proportion constituted by cross-linkable monomer units among all structural units of the polymer A having good solubility is not more than any of the upper limits set forth above, dispersibility of a slurry composition can be further improved while also even further increasing adhesiveness of a functional layer and enhancing cell characteristics of an all-solid-state secondary battery.

In a case in which the polymer A has poor solubility in the solvent, the proportion constituted by cross-linkable monomer units among all structural units included in the polymer A when all structural units are taken to be 100 mass% is preferably 0.2 mass% or more, more preferably 0.3 mass% or more, and even more preferably 0.4 mass% or more, and is preferably 3 mass% or less, more preferably 2 mass% or less, and even more preferably 1.5 mass% or less. When the proportion constituted by cross-linkable monomer units among all structural units of the polymer A having poor solubility is within any of the ranges set forth above, dispersibility of a slurry composition can be further improved while also even further increasing adhesiveness of a functional layer and enhancing cell characteristics of an all-solid-state secondary battery.

[Production method of polymer A]

No specific limitations are placed on the method by which the polymer A is produced. For example, the polymer A can be produced by polymerizing a monomer composition containing the monomers described above and then optionally performing hydrogenation.

Note that the proportional content of each monomer in the monomer composition can be set in accordance with the proportional content of each monomer unit or structural unit in the polymer A.

Although the polymerization method is not specifically limited, a method such as solution polymerization, suspension polymerization, bulk polymerization, or emulsion polymerization may be used. A known emulsifier or polymerization initiator may be used in these polymerization methods as necessary.

The method of hydrogenation is not specifically limited and may be a typical method using a catalyst (for example, refer to WO2012/165120A1, WO2013/080989A1, and JP2013-8485A).

«Polymer B»

The binder composition can optionally contain a polymer B that does not correspond to the polymer A as previously described. Any polymer other than the polymer A that can be used as a binder can be adopted as the polymer B.

The polymer B preferably includes a nitrile group-containing monomer unit, a (meth)acrylic acid ester monomer unit, an acid group-containing monomer unit, and a cross-linkable monomer unit from a viewpoint of further improving dispersibility of a slurry composition while also even further increasing adhesiveness of a functional layer and enhancing cell characteristics of an all-solid-state secondary battery. Note that the polymer B may include structural units other than a nitrile group-containing monomer unit, a (meth)acrylic acid ester monomer unit, an acid group-containing monomer unit, and a cross-linkable monomer unit (i.e., other structural units).

[Nitrile group-containing monomer unit]

Examples of nitrile group-containing monomers that can form a nitrile group-containing monomer unit of the polymer B include nitrile group-containing monomers that were previously described in the "Polymer A" section. Of these nitrile group-containing monomers, acrylonitrile is preferable.

Note that one nitrile group-containing monomer may be used individually, or two or more nitrile group-containing monomers may be used in combination.

The proportion constituted by nitrile group-containing monomer units among all structural units included in the polymer B when all structural units are taken to be 100 mass% is preferably 4 mass% or more, and more preferably 7 mass% or more, and is preferably 20 mass% or less, and more preferably 15 mass% or less. When the proportion constituted by nitrile group-containing monomer units among all structural units of the polymer B is within any of the ranges set forth above, dispersibility of a slurry composition can be further improved while also even further increasing adhesiveness of a functional layer and enhancing cell characteristics of an all-solid-state secondary battery.

[(Meth)acrylic acid ester monomer unit]

Examples of (meth)acrylic acid ester monomers that can form a (meth)acrylic acid ester monomer unit of the polymer B include (meth)acrylic acid ester monomers that were previously described in the "Polymer A" section. Of these (meth)acrylic acid ester monomers, n-butyl acrylate and ethyl acrylate are preferable.

Note that one (meth)acrylic acid ester monomer may be used individually, or two or more (meth)acrylic acid ester monomers may be used in combination.

The proportion constituted by (meth)acrylic acid ester monomer units among all structural units included in the polymer B when all structural units are taken to be 100 mass% is preferably 60 mass% or more, more preferably 70 mass% or more, and even more preferably 80 mass% or more, and is preferably 98 mass% or less, more preferably 95 mass% or less, and even more preferably 90 mass% or less. When the proportion constituted by (meth)acrylic acid ester monomer units among all structural units of the polymer B is within any of the ranges set forth above, dispersibility of a slurry composition can be further improved while also even further increasing adhesiveness of a functional layer and enhancing cell characteristics of an all-solid-state secondary battery.

[Acid group-containing monomer unit]

Examples of acid group-containing monomers that can form an acid group-containing monomer unit of the polymer B include acid group-containing monomers that were previously described in the "Polymer A" section. Of these acid group-containing monomers, methacrylic acid is preferable.

Note that one acid group-containing monomer may be used individually, or two or more acid group-containing monomers may be used in combination.

The proportion constituted by acid group-containing monomer units among all structural units included in the polymer B when all structural units are taken to be 100 mass% is preferably 0.1 mass% or more, and more preferably 0.5 mass% or more, and is preferably 3 mass% or less, and more preferably 2 mass% or less. When the proportion constituted by acid group-containing monomer units among all structural units of the polymer B is within any of the ranges set forth above, dispersibility of a slurry composition can be further improved while also even further increasing adhesiveness of a functional layer and enhancing cell characteristics of an all-solid-state secondary battery.

[Cross-linkable monomer unit]

Examples of cross-linkable monomers that can form a cross-linkable monomer unit of the polymer B include cross-linkable monomers that were previously described in the "Polymer A" section. Of these cross-linkable monomers, allyl methacrylate is preferable.

Note that one cross-linkable monomer may be used individually, or two or more cross-linkable monomers may be used in combination.

The proportion constituted by cross-linkable monomer units among all structural units included in the polymer B when all structural units are taken to be 100 mass% is preferably 0.1 mass% or more, and more preferably 0.5 mass% or more, and is preferably 3 mass% or less, and more preferably 2 mass% or less. When the proportion constituted by cross-linkable monomer units among all structural units of the polymer B is within any of the ranges set forth above, dispersibility of a slurry composition can be further improved while also even further increasing adhesiveness of a functional layer and enhancing cell characteristics of an all-solid-state secondary battery.

[Other structural units]

No specific limitations are placed on other structural units. Examples of other structural units include an aromatic vinyl monomer unit, a conjugated diene monomer unit, and a hydroxy group-containing monomer unit such as previously described in the "Polymer A" section. Note that the polymer B may include just one type of other structural unit or may include two or more types of other structural units.

In order to sufficiently enhance an effect obtained through use of the polymer B in combination with the polymer A, it is preferable that the polymer B does not include a hydroxy group-containing monomer unit.

[Solubility]

The polymer B may have good solubility or poor solubility in the solvent contained in the binder composition and slurry composition. In other words, the polymer B may be dissolved in the solvent or may be dispersed in the solvent in a particulate form in the binder composition and slurry composition.

A polymer B that has poor solubility in the solvent is preferable as the polymer B from a viewpoint of further improving dispersibility of a slurry composition while also even further increasing adhesiveness of a functional layer and enhancing cell characteristics of an all-solid-state secondary battery.

In a case in which the polymer A and the polymer B are used in combination, the proportion constituted by the polymer A among the total amount of the polymer A and the polymer B is preferably 30 mass% or more, more preferably 40 mass% or more, and even more preferably 50 mass% or more, and is preferably 90 mass% or less, more preferably 80 mass% or less, and even more preferably 70 mass% or less. When the proportion constituted by the polymer A among the total amount (100 mass%) of the polymer A and the polymer B is not less than 30 mass% and not more than 90 mass%, adhesiveness of a functional layer can be even further increased, and cell characteristics of an all-solid-state secondary battery can be enhanced.

[Production method of polymer B]

No specific limitations are placed on the method by which the polymer B is produced. For example, any of the methods previously described in the "Polymer A" section can be adopted as the production method of the polymer B.

<Solvent>

The solvent that is contained in the presently disclosed binder composition can be selected as appropriate depending on the application of the binder composition without any specific limitations. For example, the solvent may be a chain aliphatic hydrocarbon such as hexane, heptane, or octane; an alicyclic hydrocarbon such as cyclopentane or cyclohexane; an aromatic hydrocarbon such as toluene or xylene; a ketone such as ethyl methyl ketone, cyclohexanone, or diisobutyl ketone; an ester such as ethyl acetate, butyl acetate, butyl butyrate, isobutyl isobutyrate, hexyl butyrate, $\gamma$-butyrolactone, or $\varepsilon$-caprolactone; an acylonitrile such as acetonitrile or propionitrile; an ether such as tetrahydrofuran, ethylene glycol diethyl ether, n-butyl ether, or anisole; an alcohol such as methanol, ethanol, isopropanol, ethylene glycol, or ethylene glycol monomethyl ether; or an amide such as N-methylpyrrolidone or N,N-dimethylformamide.

Of these solvents, aromatic hydrocarbons, ketones, esters, and ethers are preferable from a viewpoint of further improving dispersibility of a slurry composition while also even further increasing adhesiveness of a functional layer and enhancing cell characteristics of an all-solid-state secondary battery, aromatic hydrocarbons, ketones, and esters are more preferable, xylene, diisobutyl ketone, butyl butyrate, and isobutyl isobutyrate are even more preferable, and xylene, diisobutyl ketone, and isobutyl isobutyrate are particularly preferable.

Note that one solvent may be used individually, or two or more solvents may be used in combination.

The solvent is preferably an organic solvent having a carbon number of 6 or more, and more preferably an organic solvent having a carbon number of 8 or more. The inclusion of an organic solvent having a carbon number of 6 or more in the binder composition can lower electronic resistance of an all-solid-state secondary battery and enhance cell characteristics of the all-solid-state secondary battery. This can also prevent short circuiting between electrodes caused by metal component deposition. Moreover, an organic solvent that has a carbon number of 6 or more has low reactivity with functional particles and also has excellent handleability due to having a high boiling point.

An SP value of the solvent is preferably 7.0 $(cal/cm^3)^{1/2}$ or more, and is preferably 9.5 $(cal/cm^3)^{1/2}$ or less. When the SP value of the solvent is 7.0 $(cal/cm^3)^{1/2}$ or more, dispersibility of a slurry composition can be further improved. Moreover, when the SP value of the solvent is 9.5 $(cal/cm^3)^{1/2}$ or less, degradation of functional particles due to the solvent can be prevented, and deterioration of cell characteristics of an all-solid-state secondary battery can be inhibited.

The term "SP value" as used in the present disclosure refers to a solubility parameter.

The SP value can be calculated by a method described in "Hansen Solubility Parameters: A User's Handbook, Second Edition (CRC Press)".

Moreover, the SP value of an organic compound (solvent) can be estimated from the molecular structure of the organic compound. Specifically, calculation can be performed using simulation software that can calculate an SP value from a SMILE formula (for example, HSPiP (http=//www.hansen-solubility.com)). This simulation software determines an SP value based on the theory described in "Hansen Solubility Parameters: A User's Handbook, Second Edition, Charles M. Hansen".

From a viewpoint of further improving dispersibility of a slurry composition while also even further increasing adhesiveness of a functional layer and enhancing cell characteristics of an all-solid-state secondary battery, the total amount of aromatic hydrocarbons, ketones, esters, and ethers in the solvent when the total volume of the overall solvent is taken to be 100 volume% is preferably 50 volume% or more, more preferably 70 volume% or more, even more preferably 90 volume% or more, and particularly preferably 100 volume%.

<Other components>

Examples of other components that can optionally be contained in the binder composition include, but are not specifically limited to, binders other than the polymer A and the polymer B described above, dispersants, leveling agents, defoamers, conductive materials, and reinforcing materials. These other components are not specifically limited so long as they do not influence battery reactions. One of these components may be used individually, or two or more of these components may be used in combination in a freely selected ratio.

<Production method of binder composition>

No specific limitations are placed on the method by which the presently disclosed binder composition is produced. For example, the binder composition can be produced by performing solvent exchange, further addition of other components, and so forth, as necessary, with respect to a water dispersion of a polymer serving as a binder that is obtained as previously described.

(Slurry composition for all-solid-state secondary battery)

The presently disclosed slurry composition for an all-solid-state secondary battery contains functional particles and the presently disclosed binder composition for an all-solid-state secondary battery set forth above. In other words, the presently disclosed slurry composition contains functional particles, the specific polymer described above, and a solvent and optionally contains other components. The presently disclosed slurry composition has excellent dispersibility and can be used to form a functional layer having excellent adhesiveness as a result of containing the presently disclosed binder composition.

<Functional particles>

The functional particles that are contained in the slurry composition can be selected as appropriate depending on the application of the slurry composition (type of functional layer that is to be produced using the slurry composition), for example.

Electrode active material particles, solid electrolyte particles, and conductive material particles are preferable as the functional particles.

«Electrode active material particles»

The electrode active material particles are particles that give and receive electrons in an electrode of an all-solid-state secondary battery. The electrode active material particles may be positive electrode active material particles or negative electrode active material particles.

Note that positive electrode active material particles for an all-solid-state secondary battery may be positive electrode active material particles formed of an inorganic compound or positive electrode active material particles formed of an organic compound without any specific limitations.

The positive electrode active material particles formed of an inorganic compound may be particles formed of a transition metal oxide, a complex oxide of lithium and a transition metal (lithium-containing composite metal oxide), a transition metal sulfide, or the like, for example. The aforementioned transition metal may be Fe, Co, Ni, Mn, or the like. Specific examples of inorganic compounds that may be used in the positive electrode active material particles include lithium-containing complex metal oxides such as $LiCoO_2$ (lithium cobalt oxide), $LiNiO_2$, $LiMnO_2$, $LiMn_2O_4$, $LiFePO_4$, and

$LiFeVO_4$; transition metal sulfides such as $TiS_2$, $TiS_3$, and amorphous $MoS_2$; and transition metal oxides such as $Cu_2V_2O_3$, amorphous $V_2O-P_2O_5$, $MoOs$, $V_2O_5$, and $V_6O_{13}$. These compounds may have undergone partial element substitution.

The positive electrode active material particles formed of an organic compound may be particles formed of a polyaniline, polypyrrole, polyacene, disulfide compound, polysulfide compound, N-fluoropyridinium salt, or the like, for example.

The positive electrode active material particles described above can be used individually or as a mixture of two or more types.

The particle diameter of the positive electrode active material particles described above is not specifically limited and can be the same as that of conventionally used positive electrode active material particles.

Moreover, negative electrode active material particles for an all-solid-state secondary battery may be particles formed of an allotrope of carbon such as graphite or coke. Note that negative electrode active material particles formed of an allotrope of carbon can be used in a mixed or coated form with a metal, metal salt, oxide, or the like. Examples of negative electrode active materials that can be used also include oxides and sulfates of silicon, tin, zinc, manganese, iron, nickel, and the like; lithium metal; lithium alloys such as Li-Al, Li-Bi-Cd, and Li-Sn-Cd; lithium transition metal nitrides; and silicone.

The negative electrode active material particles described above can be used individually or as a mixture of two or more types.

The particle diameter of the negative electrode active material particles described above is not specifically limited and can be the same as that of conventionally used negative electrode active material particles.

«Solid electrolyte particles»

The solid electrolyte particles are particles that conduct ions in an electrode and a solid electrolyte layer of an all-solid-state secondary battery. Although no specific limitations are placed on solid electrolyte particles used in an all-solid-state secondary battery so long as they are particles formed of a solid that displays ion conductivity, it is preferable to use particles formed of an inorganic solid electrolyte (inorganic solid electrolyte particles).

The inorganic solid electrolyte may be a crystalline inorganic lithium ion conductor, an amorphous inorganic lithium ion conductor, or a mixture thereof without any specific limitations.

Examples of crystalline inorganic lithium ion conductors include $Li_3N$, LISICON ($Li_{14}Zn(GeO_4)_4$), perovskite-type lithium ion conductors (for example, $Li_{0.5}La_{0.5}TiO_3$), garnet-type lithium ion conductors (for example, $Li_7La_3Zr_2O_{12}$), LIPON ($Li_{3+y}PO_{4-x}N_x$), Thio-LISICON ($Li_{5.25}Ge_{0.25}P_{0.75}S_4$), and argyrodite-type lithium ion conductors (for example, $Li_{5.6}PS_{4.4}Cl_{1.8}$).

The crystalline inorganic lithium ion conductors described above can be used individually or as a mixture of two or more types.

The amorphous inorganic lithium ion conductor may, for example, be a sulfur atom-containing substance that displays ion conductivity. More specific examples include glass Li-Si-S-O, Li-P-S, and an amorphous inorganic lithium ion conductor obtained using a raw material composition containing $Li_2S$ and a sulfide of an element belonging to any one of groups 13 to 15 of the periodic table.

The element belonging to any one of groups 13 to 15 may be Al, Si, Ge, P, As, Sb, or the like, for example. Moreover, the sulfide of the element belonging to any one of groups 13 to 15 may, more specifically, be $Al_2S_3$, $SiS_2$, $GeS_2$, $P_2S_3$, $P_2S_5$, $As_2S_3$, $Sb_2S_3$, or the like. The method by which the amorphous inorganic lithium ion conductor is synthesized using the raw material composition may be an amorphization method such as mechanical milling or melt quenching, for example. The amorphous inorganic lithium ion conductor that is obtained using the raw material composition containing $Li_2S$ and the sulfide of the element belonging to any one of groups 13 to 15 of the periodic table is preferably $Li_2S-P_2S_5$, $Li_2S-SiS_2$, $Li_2S-GeS_2$, or $Li_2S-Al_2S_3$, and more preferably $Li_2S-P_2S_5$.

The amorphous inorganic lithium ion conductors described above can be used individually or as a mixture of two or more types.

Of the examples described above, an amorphous sulfide containing Li and P, an argyrodite-type crystalline sulfide, or $Li_7La_3Zr_2O_{12}$ is preferable as an inorganic solid electrolyte from a viewpoint of forming a functional layer having excellent ion conductivity. As a result of having high lithium ion conductivity, an amorphous sulfide containing Li and P, an argyrodite-type crystalline sulfide, or $Li_7La_3Zr_2O_{12}$ can reduce internal resistance and improve output characteristics of an all-solid-state secondary battery when used as the inorganic solid electrolyte.

The amorphous sulfide containing Li and P is more preferably sulfide glass formed of $Li_2S$ and $P_2S_5$ from a viewpoint of reducing internal resistance and improving output characteristics of an all-solid-state secondary battery, and is particularly preferably sulfide glass produced from a mixed raw material of $Li_2S$ and $P_2S_5$ in which the molar ratio of $Li_2S$:$P_2S_5$ is 65:35 to 85:15. Moreover, the amorphous sulfide containing Li and P is preferably sulfide glass-ceramic that is obtained by reacting a mixed raw material of $Li_2S$ and $P_2S_5$ in which the molar ratio of $Li_2S$:$P_2S_5$ is 65:35 to 85:15 by a mechanochemical method. The molar ratio of $Li_2S$:$P_2S_5$ in the mixed raw material is preferably 68:32 to 80:20 from a viewpoint of maintaining a state of high lithium ion conductivity.

Note that the inorganic solid electrolyte may contain one or more sulfides selected from the group consisting of $Al_2S_3$, $B_2S_3$, and $SiS_2$ as a starting material other than $Li_2S$ and $P_2S_5$ to the extent that ion conductivity is not reduced. The addition of such a sulfide can stabilize a glass component in the inorganic solid electrolyte.

In the same manner, the inorganic solid electrolyte may contain one or more ortho-oxoacid lithium salts selected from the group consisting of $Li_3PO_4$, $Li_4SiO_4$, $Li_4GeO_4$, $Li_3BO_3$, and $Li_3AlO_3$, in addition to $Li_2S$ and $P_2S_5$. The inclusion of such an ortho-oxoacid lithium salt can stabilize a glass component in the inorganic solid electrolyte.

The solid electrolyte particles described above can be used individually or as a mixture of two or more types.

The number-average particle diameter of the solid electrolyte particles described above is preferably 0.1 $\mu$m or more, more preferably 0.3 $\mu$m or more, and even more preferably 0.5 $\mu$m or more, and is preferably 10 $\mu$m or less, more preferably 7.5 $\mu$m or less, and even more preferably 5.0 $\mu$m or less. Dispersibility of the slurry composition can be further improved when the number-average particle diameter of the solid electrolyte particles is 0.1 $\mu$m or more, whereas IV resistance of an all-solid-state secondary battery can be reduced and cell characteristics of the all-solid-state secondary battery can be sufficiently enhanced when the number-average particle diameter of the solid electrolyte particles is 10 $\mu$m or less.

Note that the "number-average particle diameter" of functional particles (electrode active material particles, solid electrolyte particles, etc.) referred to in the present disclosure can be determined by observing 100 of the functional particles using an electron microscope, measuring the particle diameters thereof in accordance with JIS Z8827-1:2008, and then calculating an average value.

<<Conductive material particles>>

The conductive material particles are particles for ensuring electrical contact between electrode active material particles in an electrode mixed material layer formed using the slurry composition. Particles formed of known conductive substances can be used as the conductive material particles without any specific limitations. Note that the shape of the conductive material particles can be any shape such as a roughly spherical shape, a fibrous shape, or a plate-like shape without any specific limitations.

Examples of conductive material particles that can be used include conductive carbon materials such as carbon black (for example, acetylene black, Ketjenblack® (Ketjenblack is a registered trademark in Japan, other countries, or both), and furnace black), single-walled and multi-walled carbon nanotubes (multi-walled carbon nanotubes are inclusive of cup-stacked carbon nanotubes), carbon nanohorns, vapor-grown carbon fiber, milled carbon fiber obtained through pyrolysis and subsequent pulverization of polymer fiber, single-layer and multi-layer graphene, and carbon non-woven fabric sheet obtained through pyrolysis of non-woven fabric formed of polymer fiber; and fibers and foils of various metals.

The conductive material particles described above can be used individually or as a mixture of two or more types. Of these conductive material particles, acetylene black is preferable from a viewpoint of enhancing cell characteristics of an all-solid-state secondary battery.

Note that the size (particle diameter, fiber diameter, fiber length, etc.) of the conductive material particles described above is not specifically limited and can be the same as that of conventionally used conductive material particles.

<Binder composition>

The presently disclosed binder composition for an all-solid-state secondary battery set forth above that contains the polymer A and a solvent and that optionally contains the polymer B and other components is used as a binder composition that is used in production of the slurry composition.

The quantitative mixing ratio of the functional particles and the binder composition can be adjusted as appropriate depending on the application of the slurry composition and the type of functional particles without any specific limitations.

As one example, the amount of the polymer A that is contained in the slurry composition is preferably 0.1 parts by mass or more, more preferably 0.2 parts by mass or more, and even more preferably 0.3 parts by mass or more per 100 parts by mass of solid electrolyte particles serving as the functional particles, and is preferably 10 parts by mass or less, more preferably 8 parts by mass or less, and even more preferably 5 parts by mass or less per 100 parts by mass of solid electrolyte particles serving as the functional particles. When the content of the polymer A in the slurry composition is 0.1 parts by mass or more per 100 parts by mass of solid electrolyte particles, the polymer A can sufficiently display functionality as a binder while also further improving dispersibility of the slurry composition. In addition, ion conductivity of a functional layer (solid electrolyte layer or electrode mixed material layer) can be improved, and cell characteristics of an all-solid-state secondary battery can be enhanced. On the other hand, when the content of the polymer A in the slurry composition is 10 parts by mass or less per 100 parts by mass of solid electrolyte particles, ion conductivity of a functional layer (solid electrolyte layer or electrode mixed material layer) can be sufficiently ensured, and excessive loss of cell characteristics of an all-solid-state secondary battery does not occur.

As another example, the amount of the polymer A that is contained in the slurry composition is preferably 0.1 parts by mass or more, more preferably 0.2 parts by mass or more, and even more preferably 0.3 parts by mass or more per 100 parts by mass of electrode active material particles serving as the functional particles, and is preferably 10 parts by mass or less, more preferably 8 parts by mass or less, and even more preferably 5 parts by mass or less per 100 parts by mass of electrode active material particles serving as the functional particles. When the content of the polymer A in the slurry composition is 0.1 parts by mass or more per 100 parts by mass of electrode active material particles, the polymer A can sufficiently display functionality as a binder while also enabling good dispersion of the electrode active material particles. Consequently, dispersibility of the slurry composition can be further improved, a functional layer (electrode mixed material layer) having electrode active material particles uniformly distributed throughout can be obtained, and cell characteristics of an all-solid-state secondary battery can be enhanced. On the other hand, when the content of the polymer A in the slurry composition is 10 parts by mass or less per 100 parts by mass of electrode active material particles, resistance of a functional layer (electrode mixed material layer) does not excessively increase, and cell characteristics of an all-solid-state secondary battery can be sufficiently ensured.

<Production of slurry composition>

No specific limitations are placed on the method by which the presently disclosed slurry composition is produced. For example, the slurry composition can be produced by mixing the functional particles and the presently disclosed binder composition by a known mixing method.

In a case in which the presently disclosed slurry composition is a slurry composition for an electrode mixed material layer, for example, the presently disclosed slurry composition may be produced by mixing electrode active material particles and conductive material particles serving as functional particles with the presently disclosed binder composition, or may be produced by mixing conductive material particles serving as functional particles and the presently disclosed binder composition to produce a slurry composition (conductive material paste containing the conductive material particles and the binder composition) and subsequently mixing this conductive material paste and electrode active material particles serving as functional particles.

(Functional layer for all-solid-state secondary battery)

The presently disclosed functional layer is a layer that contains functional particles and a polymer serving as a binder. The functional layer may, for example, be an electrode mixed material layer (positive electrode mixed material layer or negative electrode mixed material layer) that gives and receives electrons through electrochemical reactions, a solid electrolyte layer disposed between a positive electrode mixed material layer and a negative electrode mixed material layer that are in opposition to each other, or the like.

Moreover, the presently disclosed functional layer is a layer that is formed using the presently disclosed slurry composition set forth above and can be formed by, for example, applying the slurry composition set forth above onto the surface of a suitable substrate to form a coating film, and subsequently drying the coating film that has been formed. In other words, the presently disclosed functional layer is formed of a dried product of the slurry composition set forth above, normally contains functional particles and the polymer A, and optionally further contains other components. Note that components contained in the functional layer are components that were contained in the slurry composition and that the content ratio of these components is normally the same as the content ratio thereof in the slurry composition.

The presently disclosed functional layer has excellent adhesiveness as a result of being formed using the presently disclosed slurry composition.

<Substrate>

No limitations are placed on the substrate onto which the slurry composition is applied. For example, a coating film of the slurry composition may be formed on the surface of a releasable substrate, the coating film may be dried to form a functional layer, and then the releasable substrate may be peeled from the functional layer. The functional layer that has been peeled from the releasable substrate in this manner can be used as a free-standing film in formation of a battery member (for example, an electrode or a solid electrolyte layer) of an all-solid-state secondary battery.

However, it is preferable to use a current collector or an electrode as the substrate from a viewpoint of increasing battery member production efficiency through omission of a step of peeling the functional layer. More specifically, in a situation in which an electrode mixed material layer is to be produced, the slurry composition is preferably applied onto a current collector serving as a substrate. Moreover, in a situation in which a solid electrolyte layer is to be produced, the slurry composition is preferably applied onto an electrode (positive electrode or negative electrode).

<<Current collector>>

The current collector is a material having electrical conductivity and electrochemical durability. Specifically, the current collector may, for example, be made of iron, copper, aluminum, nickel, stainless steel, titanium, tantalum, gold, platinum, or the like. Of these materials, copper foil is particularly preferable as a current collector used for a negative electrode. On the other hand, aluminum foil is particularly preferable as a current collector used for a positive electrode. One of these materials may be used individually, or two or more of these materials may be used in combination in a freely selected ratio.

«Electrode»

The electrode (positive electrode or negative electrode) is not specifically limited and may be an electrode that is obtained by forming an electrode mixed material layer containing electrode active material particles, solid electrolyte particles, and a binder on a current collector such as described above.

The electrode active material particles, solid electrolyte particles, and binder contained in the electrode mixed material layer of the electrode are not specifically limited, and known examples thereof can be used. Note that the electrode mixed material layer of the electrode may be a layer that corresponds to the presently disclosed functional layer.

<Formation method of functional layer>

Examples of methods by which the functional layer may be formed on a substrate such as the current collector or electrode described above include:

(1) a method in which the presently disclosed slurry composition is applied onto the surface of a substrate (surface at the electrode mixed material layer-side in the case of an electrode; same applies below) and is then dried;
(2) a method in which a substrate is immersed in the presently disclosed slurry composition and is then dried; and
(3) a method in which the presently disclosed slurry composition is applied onto a releasable substrate and is dried to produce a functional layer that is then transferred onto the surface of an electrode or the like.

Of these methods, method (1) is particularly preferable since it allows simple control of the thickness of the functional layer. In more detail, method (1) includes a step of applying the slurry composition onto a substrate (application step) and a step of drying the slurry composition that has been applied onto the substrate to form a functional layer (functional layer formation step).

«Application step»

Examples of methods by which the slurry composition may be applied onto the substrate in the application step include, but are not specifically limited to, doctor blading, reverse roll coating, direct roll coating, gravure coating, extrusion coating, and brush coating.

«Functional layer formation step»

The method by which the slurry composition on the substrate is dried in the functional layer formation step may be any commonly known method without any specific limitations. Examples of drying methods that may be used include drying by warm, hot, or low-humidity air, drying in a vacuum, and drying by irradiation with infrared light, electron beams, or the like.

In a case in which the functional layer is an electrode mixed material layer, it is preferable that a pressing process is performed by roll pressing or the like after drying. The pressing process enables further densification of the obtained electrode mixed material layer.

(All-solid-state secondary battery)

The presently disclosed all-solid-state secondary battery includes the presently disclosed functional layer set forth above. In general, the presently disclosed all-solid-state secondary battery includes a positive electrode, a solid electrolyte layer, and a negative electrode, and at least one of a positive electrode mixed material layer of the positive electrode, a negative electrode mixed material layer of the negative electrode, and the solid electrolyte layer is the presently disclosed functional layer.

The presently disclosed all-solid-state secondary battery has excellent cell characteristics as a result of including the presently disclosed functional layer.

Note that any electrode for an all-solid-state secondary battery can be used in the presently disclosed all-solid-state secondary battery as an electrode for an all-solid-state secondary battery including an electrode mixed material layer that does not correspond to the presently disclosed functional layer without any specific limitations so long as it includes an electrode mixed material layer that does not correspond to the presently disclosed functional layer.

Moreover, any solid electrolyte layer such as a solid electrolyte layer described in JP2012-243476A, JP2013-143299A, JP2016-143614A, or the like can be used without any specific limitations in the presently disclosed all-solid-state secondary battery as a solid electrolyte layer that does not correspond to the presently disclosed functional layer.

<Production method of all-solid-state secondary battery>

The presently disclosed all-solid-state secondary battery can be produced by stacking the positive electrode and the negative electrode such that the positive electrode mixed material layer of the positive electrode and the negative electrode mixed material layer of the negative electrode are in opposition via the solid electrolyte layer, optionally performing pressing to obtain a laminate, subsequently placing the laminate in a battery container in that form or after rolling, folding, or the like in accordance with the battery shape, and then sealing the battery container. Note that an expanded metal, an overcurrent preventing device such as a fuse or a PTC device, a lead plate, or the like may be placed in the battery container as necessary in order to prevent pressure increase inside the battery and occurrence of overcharging or overdischarging. The shape of the battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. In the examples and comparative examples, the following methods were used to measure or evaluate the chemical composition and amount of solvent-insoluble content in a polymer (polymer A or polymer B), the molecular weight (weight-average molecular weight and molecular weight distribution) of a polymer A, the dispersibility of a slurry composition, the adhesiveness of a functional layer, and the IV resistance and cycle characteristics of an all-solid-state secondary battery.

<Chemical composition of polymer>

After coagulating 100 g of a binder composition containing a polymer in 1 L of methanol, 12 hours of vacuum drying was performed at a temperature of 60°C. The obtained dry polymer was analyzed by $^1$H-NMR. The proportional content (mass%, mol%) of each monomer unit or structural unit included in the polymer was calculated based on the obtained analysis values. Moreover, a hydroxy group/nitrile group molar ratio was calculated from the determined proportional content (mol%) of nitrile group-containing monomer units and proportional content (mol%) of hydroxy group-containing monomer units.

<Molecular weight of polymer A>

The weight-average molecular weight (Mw) and number-average molecular weight (Mn) of a polymer A were measured by gel permeation chromatography (GPC) under the following measurement conditions using a LiBr-DMF solution of 10 mM in concentration, and the molecular weight distribution (Mw/Mn) was also calculated.

- Separation column: Shodex KD-806M (produced by Showa Denko K.K.)
- Detector: Differential refractometer RID-10A (produced by Shimadzu Corporation)
- Eluent flow rate: 0.3 mL/min
- Column temperature: 40°C
- Standard polymer: TSK standard polystyrene (produced by Tosoh Corporation)

<Amount of solvent-insoluble content in polymer>

A water dispersion of a polymer was dried in an environment of 50% humidity and 23°C to 25°C to produce a film having a thickness of 3 ± 0.3 mm. Next, the produced film was cut up into 5 mm squares so as to prepare film pieces. Approximately 1 g of these film pieces were precisely weighed, and the weight of the precisely weighed film pieces was taken to be WO. The precisely weighed film pieces were immersed in 100 g of a binder composition solvent (temperature 25°C) for 24 hours. After 24 hours of immersion, the film pieces were pulled out of the solvent, the pulled-out film pieces were vacuum dried at 105°C for 3 hours, and the weight of these film pieces (weight of insoluble content) W1 was precisely weighed. The amount of solvent-insoluble content (%) was calculated by the following formula.

$$\text{Amount of solvent-insoluble content } (\%) = W1/W0 \times 100$$

<Dispersibility of slurry composition>

The viscosity of a slurry composition for an all-solid-state secondary battery (slurry composition for an electrode mixed material layer or slurry composition for a solid electrolyte layer) was measured by a Brookfield B-type viscometer (60 rpm, 25°C) and was evaluated by the following standard. A smaller viscosity at the same solid content concentration with the same type of slurry composition indicates better dispersion of solid content such as functional particles contained in the slurry composition.

A: Viscosity of less than 3,000 mPa·s
B: Viscosity of not less than 3,000 mPa·s and less than 5,000 mPa·s
C: Viscosity of not less than 5,000 mPa·s and less than 8,000 mPa·s
D: Viscosity of not less than 8,000 mPa·s or not dispersed (no fluidity)

<Adhesiveness of functional layer>

<<Positive electrode mixed material layer>>

A rectangle of 1.0 cm in width by 10 cm in length was cut out from a positive electrode as a test specimen. Cellophane tape (tape prescribed by JIS Z1522) was affixed to the surface at the positive electrode mixed material layer-side of the test specimen, the cellophane tape was subsequently peeled off in a direction at 180° from one end of the test specimen at a speed of 50 mm/min, and the stress during this peeling was measured. A total of three measurements were made in this manner. An average value of these measurements was determined, was taken to be the peel strength (N/m), and was evaluated by the following standard. A larger peel strength indicates better adhesiveness of the positive electrode mixed material layer and indicates stronger close adherence to a current collector.

A+: Peel strength of 4.5 N/m or more
A: Peel strength of not less than 4 N/m and less than 4.5 N/m
B: Peel strength of not less than 3 N/m and less than 4 N/m
C: Peel strength of not less than 2 N/m and less than 3 N/m
D: Peel strength of less than 2 N/m

<<Negative electrode mixed material layer>>

A rectangle of 1.0 cm in width by 10 cm in length was cut out from a negative electrode as a test specimen. Cellophane tape (tape prescribed by JIS Z1522) was affixed to the surface at the negative electrode mixed material layer-side of the test specimen, the cellophane tape was subsequently peeled off in a direction at 180° from one end of the test specimen at a speed of 50 mm/min, and the stress during this peeling was measured. A total of three measurements were made in this manner. An average value of these measurements was determined, was taken to be the peel strength (N/m), and was evaluated by the following standard. A larger peel strength indicates better adhesiveness of the negative electrode mixed material layer and indicates stronger close adherence to a current collector.

A+: Peel strength of 5 N/m or more
A: Peel strength of not less than 4 N/m and less than 5 N/m
B: Peel strength of not less than 3 N/m and less than 4 N/m
C: Peel strength of not less than 2 N/m and less than 3 N/m

D: Peel strength of less than 2 N/m

<IV resistance of all-solid-state secondary battery>

An all-solid-state secondary battery was charged to an SOC (State Of Charge) of 50% at 1C (C is a value expressed by rated capacity (mA)/1 h (hours)) in a 25°C atmosphere, and was subsequently subjected to 30 seconds of charging and 30 seconds of discharging at each of 0.1C, 0.2C, 0.5C, 1C, and 2C centered on an SOC of 50%. The battery voltage after 10 seconds at the discharging side was plotted against the current value, and the gradient of this plot was determined as the IV resistance ($\Omega$) (IV resistance during charging and IV resistance during discharging). The obtained IV resistance value ($\Omega$) was evaluated by the following standard. A smaller value for IV resistance indicates lower internal resistance.

A+: IV resistance of less than 70 $\Omega$
A: IV resistance of not less than 70 $\Omega$ and less than 80 $\Omega$
B: IV resistance of not less than 80 $\Omega$ and less than 90 $\Omega$
C: IV resistance of not less than 90 $\Omega$ and less than 100 $\Omega$
D: IV resistance of 100 $\Omega$ or more

<Cycle characteristics of all-solid-state secondary battery>

An all-solid-state secondary battery was subjected to 50 charge/discharge cycles at 25°C in which the all-solid-state secondary battery was charged from 3 V to 4.2 V at 0.2C and then discharged from 4.2 V to 3 V at 0.2C. A value determined by calculating the 0.2C discharge capacity of the 50th cycle as a percentage relative to the 0.2C discharge capacity of the 1st cycle was taken to be a capacity maintenance rate and was evaluated by the following standard. A larger value for the capacity maintenance rate indicates that there is less reduction of discharge capacity and that the all-solid-state secondary battery has better cycle characteristics.

A+: Capacity maintenance rate of 90% or more
A: Capacity maintenance rate of not less than 80% and less than 90%
B: Capacity maintenance rate of not less than 70% and less than 80%
C: Capacity maintenance rate of not less than 60% and less than 70%
D: Capacity maintenance rate of less than 60%

(Example 1)

<Production of binder composition>

A 1 L septum-equipped flask (reactor) that included a stirrer was charged with 90 parts of deionized water and 0.5 parts of sodium lauryl sulfate as an emulsifier. The gas phase was purged with nitrogen gas, the temperature was raised to 60°C, and then 0.3 parts of ammonium persulfate (APS) as a polymerization initiator was dissolved in 20.0 parts of deionized water and was added into the flask.
Meanwhile a monomer composition was obtained in a separate vessel (emulsion vessel) by mixing 30 parts of deionized water, 0.5 parts of sodium lauryl sulfate as an emulsifier, and 68 parts of n-butyl acrylate, 25 parts of ethyl acrylate, 2 parts of 2-hydroxyethyl methacrylate, and 5 parts of acrylonitrile as monomers. The monomer composition was continuously added into the 1 L septum-equipped flask over 3 hours to perform polymerization. The reaction was carried out at 60°C during addition. Once the addition was complete, a further 2 hours of stirring was performed at 80°C, and then the reaction was ended. The resultant water dispersion of a polymer A was used to measure the amount of xylene (solvent) insoluble content in the polymer A and to determine whether the polymer A had good solubility or poor solubility in xylene. The molecular weight (weight-average molecular weight and molecular weight distribution) of the polymer A was also measured. The results are shown in Table 1.
Next, an appropriate amount of xylene as a solvent was added to the obtained water dispersion of the polymer A so as to obtain a mixture. Thereafter, distillation was performed under reduced pressure at 80°C to remove water and excess xylene from the mixture, and thereby obtain a binder composition (solid content concentration: 10%). The obtained binder composition was used to measure the chemical composition of the polymer A. The results are shown in Table 1.

<Production of slurry composition for positive electrode mixed material layer>

After mixing 70 parts of lithium cobalt oxide (number-average particle diameter: 11.5 $\mu$m) as positive electrode

active material particles, 25.5 parts of sulfide glass formed of $Li_2S$ and $P_2S_5$ ($Li_2S/P_2S_5$ = 70 mol%/30 mol%; number-average particle diameter: 0.9 $\mu$m) as solid electrolyte particles, 2.5 parts of acetylene black as conductive material particles, and 2 parts (in terms of solid content) of the binder composition obtained as described above and then further adding xylene as a solvent so as to adjust the solid content concentration to 80%, these materials were mixed for 60 minutes in a planetary mixer. Xylene was subsequently further added so as to adjust the solid content concentration to 65%, and then 10 minutes of mixing was performed to produce a slurry composition for a positive electrode mixed material layer. The dispersibility of this slurry composition for a positive electrode mixed material layer was evaluated. The result is shown in Table 1.

<Production of slurry composition for negative electrode mixed material layer>

After mixing 60 parts of graphite (number-average particle diameter: 20 $\mu$m) as negative electrode active material particles, 36.5 parts of sulfide glass formed of $Li_2S$ and $P_2S_5$ ($Li_2S/P_2S_5$ = 70 mol%/30 mol%; number-average particle diameter: 0.9 $\mu$m) as solid electrolyte particles, 1.5 parts of acetylene black as conductive material particles, and 2.5 parts (in terms of solid content) of the binder composition obtained as described above and then further adding xylene as a solvent so as to adjust the solid content concentration to 65%, these materials were mixed for 60 minutes in a planetary mixer. Xylene was subsequently further added so as to adjust the solid content concentration to 60%, and then mixing was performed by a planetary mixer to produce a slurry composition for a negative electrode mixed material layer. The dispersibility of this slurry composition for a negative electrode mixed material layer was evaluated. The result is shown in Table 1.

<Production of slurry composition for solid electrolyte layer>

After mixing 100 parts of sulfide glass formed of $Li_2S$ and $P_2S_5$ ($Li_2S/P_2S_5$ = 70 mol%/30 mol%; number-average particle diameter: 0.9 $\mu$m) as solid electrolyte particles and 2 parts (in terms of solid content) of the binder composition obtained as described above in a glovebox under an argon gas atmosphere (moisture concentration: 0.6 mass ppm; oxygen concentration: 1.8 mass ppm) and then further adding xylene as a solvent so as to adjust the solid content concentration to 65%, these materials were mixed for 60 minutes in a planetary mixer. Xylene was subsequently further added so as to adjust the solid content concentration to 55%, and then mixing was performed by a planetary mixer to produce a slurry composition for a solid electrolyte layer. The dispersibility of this slurry composition for a solid electrolyte layer was evaluated. The result is shown in Table 1.

<Production of positive electrode>

The slurry composition for a positive electrode mixed material layer was applied onto the surface of a current collector (aluminum foil; thickness: 20 $\mu$m) and was dried (60 minutes at temperature of 120°C) so as to form a positive electrode mixed material layer of 75 $\mu$m in thickness, and thereby obtain a positive electrode. This positive electrode was used to evaluate adhesiveness of the positive electrode mixed material layer. The result is shown in Table 1.

<Production of negative electrode>

The slurry composition for a negative electrode mixed material layer was applied onto the surface of a current collector (copper foil; thickness: 15 $\mu$m) and was dried (60 minutes at temperature of 120°C) to form a negative electrode mixed material layer of 90 $\mu$m in thickness, and thereby obtain a negative electrode. This negative electrode was used to evaluate adhesiveness of the negative electrode mixed material layer. The result is shown in Table 1.

<Production of all-solid-state secondary battery>

Next, the slurry composition for a solid electrolyte layer was applied onto imide film (thickness: 25 $\mu$m) and was dried (60 minutes at temperature of 120°C) to form a solid electrolyte layer of 150 $\mu$m in thickness. The solid electrolyte layer on the imide film and the positive electrode were affixed with the solid electrolyte layer and the positive electrode mixed material layer in contact with each other, a pressing process was performed such that 400 MPa of pressure (pressing pressure) was applied, and the solid electrolyte layer was transferred onto the positive electrode mixed material layer from the imide film to thereby obtain a solid electrolyte layer-equipped positive electrode.

The solid electrolyte layer-equipped positive electrode and the negative electrode were affixed with the solid electrolyte layer of the solid electrolyte layer-equipped positive electrode and the negative electrode mixed material layer of the negative electrode in contact with each other, and a pressing process was performed such that 400 MPa of pressure (pressing pressure) was applied to the solid electrolyte layer of the solid electrolyte layer-equipped positive electrode to thereby obtain an all-solid-state secondary battery. The thickness of the solid electrolyte layer in the all-solid-state secondary battery after pressing was 120 $\mu$m. IV resistance and cycle characteristics were evaluated for this all-solid-state secondary battery. The results are shown in Table 1.

(Example 2)

A binder composition, a slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that 12 parts of acrylonitrile, 2 parts of 2-hydroxyethyl methacrylate, 62 parts of n-butyl acrylate, 14 parts of ethyl acrylate, and 10 parts of styrene were used as monomers in production of the binder composition. The results are shown in Table 1.

(Example 3)

A binder composition, a slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that the amounts of acrylonitrile (AN), 2-hydroxyethyl methacrylate (HEMA), n-butyl acrylate (BA), and ethyl acrylate (EA) were changed as indicated below in production of the binder composition. The results are shown in Table 1.
AN: 5 parts; HEMA: 1.5 parts; BA: 88 parts; EA: 5.5 parts

(Example 4)

A slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that a binder composition produced as described below was used. The results are shown in Table 1.

<Production of binder composition>

A binder composition (binder composition A1) containing the polymer A of Example 1 was produced in the same way as in Example 1. In addition, a binder composition (binder composition B1) containing a polymer B was produced in the same way as the binder composition A1 in Example 1 with the exception that 10 parts of acrylonitrile, 65 parts of n-butyl acrylate, 23 parts of ethyl acrylate, 1 part of methacrylic acid, and 1 part of allyl methacrylate were used as monomers. The binder composition A1 and the binder composition B1 were then mixed in a ratio of 50:50 (mass ratio).

(Example 5)

A slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that a binder composition produced as described below was used. The results are shown in Table 1.

<Production of binder composition>

A binder composition (binder composition A1) containing the polymer A of Example 1 was produced in the same way as in Example 1. In addition, a binder composition (binder composition A2) containing a different polymer A was produced in the same way as the binder composition A1 in Example 1 with the exception that 10 parts of acrylonitrile, 0.5 parts of 2-hydroxyethyl methacrylate, 68 parts of n-butyl acrylate, 20.7 parts of ethyl acrylate, and 0.8 parts of allyl methacrylate were used as monomers. The binder composition A1 and the binder composition A2 were then mixed in a ratio of 50:50 (mass ratio).

(Examples 6 to 10)

A binder composition, a slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that 2 parts of 4-hydroxybutyl acrylate (Example 6), 2 parts of 2-hydroxyethyl acrylate (Example 7), 2.5 parts of 3-hydroxy-1-adamantyl acrylate (Example 8), 2.5 parts of 1,4-cyclohexanedimethanol monoacrylate (Example 9), or 2 parts of 2-hydroxypropyl methacrylate (Example 10) was used as a hydroxy group-containing monomer instead of 2 parts of 2-hydroxyethyl methacrylate in production of the binder composition. The results are shown in Table 1 (Examples 6 to 9) and Table 2 (Example 10).

(Examples 11 to 14)

A binder composition, a slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that the amounts of acrylonitrile (AN), 2-hydroxyethyl methacrylate (HEMA), n-butyl acrylate (BA), and ethyl acrylate (EA) were changed as indicated below in production of the binder composition. The results are shown in Table 2.
Example 11: 3.5 parts of AN, 1.8 parts of HEMA, 69.5 parts of BA, 25.2 parts of EA
Example 12: 22 parts of AN, 2 parts of HEMA, 57 parts of BA, 19 parts of EA
Example 13: 5 parts of AN, 3 parts of HEMA, 68 parts of BA, 24 parts of EA
Example 14: 5 parts of AN, 0.2 parts of HEMA, 68 parts of BA, 26.8 parts of EA

(Example 15)

A binder composition, a slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that 5 parts of acrylonitrile, 2 parts of 2-hydroxyethyl methacrylate, and 93 parts of 2-ethylhexyl acrylate were used as monomers in production of the binder composition. The results are shown in Table 2.

(Example 16)

A slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that a binder composition produced as described below was used. The results are shown in Table 2.

<Production of binder composition>

A reactor was charged with 2 parts of potassium oleate as an emulsifier, 0.1 parts of potassium phosphate as a stabilizer, and 150 parts of water, and then 25 parts of acrylonitrile, 43 parts of 1,3-butadiene, 30 parts of n-butyl acrylate, and 2 parts of 2-hydroxyethyl methacrylate as monomers and 0.31 parts of t-dodecyl mercaptan as a molecular weight modifier were added, and emulsion polymerization was initiated at 10°C in the presence of 0.015 parts of ferrous sulfate as an activator and 0.05 parts of paramenthane hydroperoxide as a polymerization initiator. At the point at which the polymerization conversion rate reached 85%, 0.2 parts of hydroxylamine sulfate was added per 100 parts of monomer to stop polymerization.
Once polymerization had stopped, heating was performed, unreacted monomer was collected by steam distillation under reduced pressure at 70°C, and then 2 parts of an alkylated phenol as an antioxidant was added to obtain a copolymer latex.
A 1 L autoclave equipped with a stirrer was charged with 400 mL (total solid content: 48 g) of the obtained copolymer latex, and then nitrogen gas was passed for 10 minutes so as to remove dissolved oxygen in the copolymer solution. Thereafter, 50 mg of palladium acetate as a hydrogenation reaction catalyst was dissolved in 180 mL of water to which 4 molar equivalents of nitric acid relative to Pd had been added and was added into the autoclave. Purging of the system with hydrogen gas was performed twice, and then the contents of the autoclave were heated to 50°C in a state in which the pressure was raised to 3 MPa with hydrogen gas, and a hydrogenation reaction was performed for 6 hours.
The contents of the autoclave were then restored to room temperature, the system was converted to a nitrogen atmosphere, and an evaporator was used to perform concentrating to a solid content concentration of 40% to yield a water dispersion of a polymer A (hydrogenated nitrile rubber). The obtained water dispersion of the polymer A was used to measure the amount of xylene (solvent) insoluble content in the polymer A and to determine whether the polymer A had good solubility or poor solubility in xylene. The molecular weight (weight-average molecular weight and molecular weight distribution) of the polymer A was also measured. The results are shown in Table 2.

Next, an appropriate amount of xylene as a solvent was added to the obtained water dispersion of the polymer A so as to obtain a mixture. Thereafter, distillation was performed under reduced pressure at 80°C to remove water and excess xylene from the mixture, and thereby obtain a binder composition (solid content concentration: 10%). The obtained binder composition was used to measure the chemical composition of the polymer A. The results are shown in Table 2.

(Examples 17 to 20)

A binder composition, a slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that butyl butyrate (Example 17), anisole (Example 18), isobutyl isobutyrate (Example 19), or diisobutyl ketone (Example 20) was used instead of xylene as a solvent in production of the binder composition and each of the slurry compositions. The results are shown in Table 2.

(Example 21)

A positive electrode, a negative electrode, and an all-solid-state secondary battery were prepared and various evaluations were performed in the same way as in Example 1 with the exception that a binder composition and various slurry compositions that were produced as described below were used. The results are shown in Table 2.

<Production of binder composition>

A binder composition (binder composition A3) containing a polymer A was produced in the same way as in Example 9 with the exception that butyl butyrate was used instead of xylene as a solvent. In addition, a binder composition (binder composition B2) containing a polymer B was produced in the same way as in Example 4 with the exception that butyl butyrate was used instead of xylene as a solvent. The binder composition A3 and the binder composition B2 described above were mixed in a ratio of 50:50 (mass ratio).

<Production of slurry composition for positive electrode mixed material layer>

A slurry composition for a positive electrode mixed material layer was produced in the same way as in Example 1 with the exception that the binder composition obtained as described above was used and that butyl butyrate was used instead of xylene as a solvent.

<Production of slurry composition for negative electrode mixed material layer>

A slurry composition for a negative electrode mixed material layer was produced in the same way as in Example 1 with the exception that the binder composition obtained as described above was used and that butyl butyrate was used instead of xylene as a solvent.

<Production of slurry composition for solid electrolyte layer>

A slurry composition for a solid electrolyte layer was produced in the same way as in Example 1 with the exception that the binder composition obtained as described above was used and that butyl butyrate was used instead of xylene as a solvent.

(Example 22)

A binder composition, a slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 19 with the exception that 17 parts of acrylonitrile, 5 parts of 1,4-cyclohexanedimethanol monoacrylate, 45 parts of 1,3-butadiene, and 33 parts of n-butyl acrylate were used as monomers in production of the binder composition. The results are shown in Table 2.

(Comparative Examples 1 to 5)

A binder composition, a slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that the amounts of acrylonitrile (AN), 2-hydroxyethyl methacrylate (HEMA), n-butyl acrylate (BA), and ethyl acrylate (EA) were changed as indicated below in production of the binder composition. The results are shown in Table 3.

Comparative Example 1: 0 parts of AN, 2 parts of HEMA, 68 parts of BA, 30 parts of EA

Comparative Example 2: 32 parts of AN, 2 parts of HEMA, 56 parts of BA, 10 parts of EA

Comparative Example 3: 2 parts of AN, 0 parts of HEMA, 68 parts of BA, 30 parts of EA

Comparative Example 4: 5 parts of AN, 4 parts of HEMA, 65 parts of BA, 26 parts of EA

Comparative Example 5: 5 parts of AN, 0.07 parts of HEMA, 68.93 parts of BA, 26 parts of EA

In Tables 1 to 3, shown below:

"Hydroxy group/Nitrile group molar ratio" indicates molar ratio of proportional content of hydroxy group-containing monomer units relative to proportional content of nitrile group-containing monomer units in polymer A;
"AN" indicates acrylonitrile unit;
"HEMA" indicates 2-hydroxyethyl methacrylate unit;
"4HBA" indicates 4-hydroxybutyl acrylate unit;
"β-HEA" indicates 2-hydroxyethyl acrylate unit;
"HAdA" indicates 3-hydroxy-1-adamantyl acrylate unit;
"CHDMMA" indicates 1,4-cyclohexanedimethanol monoacrylate unit;
"HPMMA" indicates 2-hydroxypropyl methacrylate unit;
"BA" indicates n-butyl acrylate unit;
"EA" indicates ethyl acrylate unit;
"2EHA" indicates 2-ethylhexyl acrylate unit;
"ST" indicates styrene unit;
"MAA" indicates methacrylic acid unit;
"AMA" indicates allyl methacrylate unit;
"H-BD" indicates hydrogenated 1,3-butadiene unit;
"Mw" indicates weight-average molecular weight;
"Mw/Mn" indicates molecular weight distribution;
"Good" indicates good solubility;
"Poor" indicates poor solubility;
"XY" indicates xylene;
"HB" indicates butyl butyrate;
"AS" indicates anisole;
"IB" indicates isobutyl isobutyrate;
"DIK" indicates diisobutyl ketone;
"Positive" indicates positive electrode;
"Negative" indicates negative electrode; and
"Solid" indicates solid electrolyte layer.

Note that for "Hydroxy group/Nitrile group molar ratio" in Tables 1 to 3, a value calculated from the charged amounts and molecular weights of monomers is rounded and then indicated to two significant figures.

[Table 1]

| | | | | | | Example 1 | Example 2 | Example 3 | Example 4 | Example 5 | | Example 6 | Example 7 | Example 8 | Example 9 |
|---|---|---|---|---|---|---|---|---|---|---|---|---|---|---|---|
| Binder composition | Binder | Polymer A | Nitrile group-containing monomer unit | | Type | AN | AN | AN | AN | AN | AN | AN | AN | AN | AN |
| | | | | | Proportional content [mass%] | 5 | 12 | 5 | 5 | 5 | 10 | 5 | 5 | 5 | 5 |
| | | | Hydroxy group-containing monomer unit | | Type | HEMA | HEMA | HEMA | HEMA | HEMA | HEMA | 4HBA | β-HEA | HAdA | CHDMMA |
| | | | | | Proportional content [mass%] | 2 | 2 | 1.5 | 2 | 2 | 0.5 | 2 | 2 | 2.5 | 2.5 |
| | | | (Meth)acrylic acid ester monomer unit | | Type | BA | BA | BA | BA | BA | BA | BA | BA | BA | BA |
| | | | | | Proportional content [mass%] | 68 | 62 | 88 | 68 | 68 | 68 | 68 | 68 | 68 | 68 |
| | | | | | Type | EA | EA | EA | EA | EA | EA | EA | EA | EA | EA |
| | | | | | Proportional content [mass%] | 25 | 14 | 5.5 | 25 | 25 | 207 | 25 | 25 | 24.5 | 24.5 |
| | | | Other structural unit | | Type | - | ST | - | - | - | AMA | - | - | - | - |
| | | | | | Proportional content [mass%] | - | 10 | - | - | - | 0.8 | - | - | - | - |
| | | | Hydroxy group/Nitrile group molar ratio [-] | | | 0.16 | 0.068 | 0.12 | 0.16 | 0.16 | 0.020 | 0.15 | 0.18 | 0.12 | 0.13 |
| | | | Mw [-] | | | 1200000 | 1200000 | 1200000 | 1200000 | 1200000 | - | 1000000 | 900000 | 800000 | 1100000 |
| | | | Mw/Mn [-] | | | 3.5 | 3.5 | 3.5 | 3.5 | 3.5 | - | 3.4 | 3.6 | 32 | 4 |
| | | | Property in solvent | | | Good | Good | Good | Good | Good | Poor | Good | Good | Good | Good |
| | | | Amount [mass%] | | | 100 | 100 | 100 | 50 | 50 | 50 | 100 | 100 | 100 | 100 |

EP 4 350 813 A1

| | | | | | Example 1 | Example 2 | Example 3 | Example 4 | Example 5 | Example 6 | Example 7 | Example 8 | Example 9 |
|---|---|---|---|---|---|---|---|---|---|---|---|---|---|
| | Polymer B | | Nitrile group-containing monomerunit | Type | - | - | - | AN | - | - | - | - | - |
| | | | | Proportional content [mass%] | - | - | - | 10 | - | - | - | - | - |
| | | | (Meth)acrylic acid ester monomer unit | Type | - | - | - | BA | - | - | - | - | - |
| | | | | Proportional content [mass%] | - | - | - | 65 | - | - | - | - | - |
| | | | | Type | - | - | - | EA | - | - | - | - | - |
| | | | | Proportional content [mass%] | - | - | - | 23 | - | - | - | - | - |
| | | | Acid group-containing monomer unit | Type | - | - | - | MAA | - | - | - | - | - |
| | | | | Proportional content [mass%] | - | - | - | 1 | - | - | - | - | - |
| | | | Cross-linkable monomer unit | Type | - | - | - | AMA | - | - | - | - | - |
| | | | | Proportional content [mass%] | - | - | - | 1 | - | - | - | - | - |
| | | | Property in solvent | | - | - | - | Poor | - | - | - | - | - |
| | | | Amount [mass%] | | - | - | - | 50 | - | - | - | - | - |
| | Solvent Type | | | | XY | XY | XY | XY | XY | XY | XY | XY | XY |
| Evaluation | Dispersibility | | | Positive | A | A | A | A | A | A | A | A | A |
| | | | | Negative | A | A | A | A | A | A | A | A | A |
| | | | | Solid | A | A | A | A | A | A | A | A | A |
| | Adhesiveness | | | Positive | A | A | A | A+ | A+ | B | A | B | A |
| | | | | Negative | A | A | A | A+ | A+ | B | A | B | A |

EP 4 350 813 A1

26

(continued)

|  | Example 1 | Example 2 | Example 3 | Example 4 | Example 5 | Example 6 | Example 7 | Example 8 | Example 9 |
|---|---|---|---|---|---|---|---|---|---|
| IV resistance | A | A | A | A+ | A+ | A | A | A | A |
| Cycle characteristics | A | A | A | A+ | A+ | B | A | B | A |

[Table 2]

| Binder composi-tion | Binder | Poly-mer A | | | | Example | 10 Example | 11 Example | 12 Example | 13 Example | 14 Example | 15 Example | 16 Example | 17 Example | 18 Example | 19 Example | 20 Example 21 | Example 22 |
|---|---|---|---|---|---|---|---|---|---|---|---|---|---|---|---|---|---|---|
| | | | Nitrite group-containing monomer unit | Type | | AN | AN | AN | AN | AN | AN | AN | AN | AN | AN | AN | AN | AN |
| | | | | Proportional content [mass%] | | 5 | 3.5 | 22 | 5 | 5 | 5 | 25 | 5 | 5 | 5 | 5 | 5 | 17 |
| | | | Hydroxy group-contain-ing mono-mer unit | Type | | HPMMA | HEMA | HEMA | HEMA | HEMA | HEMA | HEMA | HEMA | HEMA | HEMA | HEMA | CHDM-MA | CHDM-MA |
| | | | | Proportion-al content [mass%] | | 2 | 1.8 | 2 | 3 | 0.2 | 2 | 2 | 2 | 2 | 2 | 2 | 2.5 | 5 |
| | | | (Meth) acrylic acid ester monomer unit | Type | | BA | BA | BA | BA | BA | 2EHA | BA | BA | BA | BA | BA | BA | BA |
| | | | | Proportional content [mass%] | | 68 | 69.5 | 57 | 68 | 68 | 93 | 30 | 68 | 68 | 68 | 68 | 68 | 33 |
| | | | | Type | | EA | EA | EA | EA | EA | - | - | EA | EA | EA | EA | EA | - |
| | | | | Proportional content [mass%] | | 25 | 25.2 | 19 | 24 | 26.8 | - | - | 25 | 25 | 25 | 25 | 24.5 | - |
| | | | Other structural unit | Type | | - | - | - | - | - | - | H-BD | - | - | - | - | - | H-BD |
| | | | | Proportional content [mass%] | | - | - | - | - | - | - | 43 | - | - | - | - | - | 45 |
| | | | Hydroxy group/Nitrile group molar ratio [-] | | | 0.15 | 0.21 | 0.037 | 0.24 | 0.016 | 0.16 | 0.033 | 0.16 | 0.16 | 0.16 | 0.16 | 0.13 | 0.08 |
| | | | Mw [-] | | | 700000 | 1300000 | 1400000 | 1100000 | 1100000 | 800000 | 1100000 | 1200000 | 1200000 | 1200000 | 1100000 | 1100000 | 400000 |
| | | | Mw/Mn [-] | | | 3.1 | 3.5 | 3.4 | 3.3 | 3.5 | 3.7 | 2.7 | 3.5 | 3.5 | 3.5 | 3.5 | 4 | 2.3 |
| | | | Property in solvent | | | Good | Good | Good | Good | Good | Good | Good | Good | Good | Good | Good | Good | Good |
| | | | Amount [mass%] | | | 100 | 100 | 100 | 100 | 100 | 100 | 100 | 100 | 100 | 100 | 100 | 50 | 100 |

EP 4 350 813 A1

(continued)

| | | | | Example 9 | 10 Example | 11 Example | 12 Example | 13 Example | 14 Example | 15 Example | 16 Example | 17 Example | 18 Example | 19 Example | 20 Example 21 | Example 22 |
|---|---|---|---|---|---|---|---|---|---|---|---|---|---|---|---|---|
| Polymer B | | Nitrile group-containing monomer unit | Type | - | - | - | - | - | - | - | - | - | - | - | AN | - |
| | | | Proportional content [mass%] | - | - | - | - | - | - | - | - | - | - | - | 10 | - |
| | | (Meth) acrylic acid ester monomer unit | Type | - | - | - | - | - | - | - | - | - | - | - | BA | - |
| | | | Proportional content [mass%] | | | | | | - | - | - | - | - | - | 65 | - |
| | | | Type | - | - | - | - | - | - | - | - | - | - | - | EA | - |
| | | | Proportional content [mass%] | - | - | - | - | - | - | - | - | - | - | - | 23 | - |
| | | Acid group-containing monomer unit | Type | - | - | - | - | - | - | - | - | - | - | - | MAA | - |
| | | | Proportional content [mass%] | - | - | - | - | - | - | - | - | - | - | - | 1 | - |
| | | Cross-linkable monomer unit | Type | - | - | - | - | - | - | - | - | - | - | - | AMA | - |
| | | | Proportional content [mass%] | - | - | - | - | - | - | - | - | - | - | - | 1 | - |
| | | Property in solvent | | - | - | - | - | - | - | - | - | - | - | - | Poor | - |
| | | Amount [mass%] | | - | - | - | - | - | - | - | - | - | - | - | 50 | - |
| Solvent | | | Type | XY | XY | XY | XY | XY | XY | XY | HB | AS | IB | DIK | HB | IB |
| Dispersibility | | | Positive | A | B | B | A | A | A | B | A | B | A | A | A | B |
| | | | Negative | A | B | B | A | A | A | B | A | B | A | A | A | B |
| | | | Solid | A | B | B | A | A | A | B | A | B | A | A | A | B |

29

(continued)

| Evaluation | Adhesiveness | Positive | Example | 10 Example | 11 Example | 12 Example | 13 Example | 14 Example | 15 Example | 16 Example | 17 Example | 18 Example | 19 Example | 20 Example 21 | Example 22 |
|---|---|---|---|---|---|---|---|---|---|---|---|---|---|---|---|
| | | Positive | B | A | A | B | B | A | B | A | B | A | A | A+ | B |
| | | Negative | B | A | A | B | B | A | B | A | B | A | A | A+ | B |
| | IV resistance | | A | B | B | A | A | A | B | B | B | A | A | B | B |
| | Cycle characteristics | | B | A | A | B | B | A | B | A | B | A | A | A | B |

[Table 3]

| | | | | | | Comparative Example 1 | Comparative Example 2 | Comparative Example 3 | Comparative Example 4 | Comparative Example 5 |
|---|---|---|---|---|---|---|---|---|---|---|
| Binder composition | Binder | Polymer A | Nitrile group-containing monomer unit | Type | | - | AN | AN | AN | AN |
| | | | | Proportional content [mass%] | | - | 32 | 2 | 5 | 5 |
| | | | Hydroxy group-containing monomer unit | Type | | HEMA | HEMA | - | HEMA | HEMA |
| | | | | Proportional content [mass%] | | 2 | 2 | - | 4 | 0.07 |
| | | | (Meth)acrylic acid ester monomer unit | Type | | BA | BA | BA | BA | BA |
| | | | | Proportional content [mass%] | | 68 | 56 | 68 | 65 | 68.93 |
| | | | | Type | | EA | EA | EA | EA | EA |
| | | | | Proportional content [mass%] | | 30 | 10 | 30 | 26 | 26 |
| | | | Other structural unit | Type | | - | - | - | - | - |
| | | | | Proportional content [mass%] | | - | - | - | - | - |
| | | | Hydroxy group/Nitrile group molar ratio [-] | | | - | 0.025 | 0 | 0.33 | 0.0057 |
| | | | Mw [-] | | | 1000000 | 1400000 | 1100000 | 1300000 | 1100000 |
| | | | Mw/Mn [-] | | | 3.5 | 3.4 | 3.6 | 3.5 | 3.5 |
| | | | Property in solvent | | | Good | Good | Good | Good | Good |
| | | | Amount [mass%] | | | 100 | 100 | 100 | 100 | 100 |

| | | | | | Comparative Example 1 | Comparative Example 2 | Comparative Example 3 | Comparative Example 4 | Comparative Example 5 |
|---|---|---|---|---|---|---|---|---|---|
| Polymer B | | | Nitrile group-containing monomer unit | Type | - | - | - | - | - |
| | | | | Proportional content [mass%] | - | - | - | - | - |
| | | | (Meth)acrylic acid ester monomer unit | Type | - | - | - | - | - |
| | | | | Proportional content [mass%] | | | | | |
| | | | | Type | - | - | - | - | - |
| | | | | Proportional content [mass%] | - | - | - | - | - |
| | | | Acid group-containing monomer unit | Type | - | - | - | - | - |
| | | | | Proportional content [mass%] | - | - | - | - | - |
| | | | Cross-linkable monomer unit | Type | - | - | - | - | - |
| | | | | Proportional content [mass%] | - | - | - | - | - |
| | | | Property in solvent | | - | - | - | - | - |
| | | | Amount [mass%] | | - | - | - | - | - |
| | Solvent Type | | | | XY | XY | XY | XY | XY |
| Dispersibility | | | Positive | | D | D | C | D | C |
| | | | Negative | | D | D | C | D | C |
| | | | Solid | | D | D | C | D | C |

EP 4 350 813 A1

32

(continued)

| | | | Comparative Example 1 | Comparative Example 2 | Comparative Example 3 | Comparative Example 4 | Comparative Example 5 |
|---|---|---|---|---|---|---|---|
| Evaluation | Adhesiveness | Positive | D | D | D | D | D |
| | | Negative | D | D | D | D | D |
| | IV resistance | | D | D | C | D | C |
| | Cycle characteristics | | D | D | D | D | D |

It can be seen from Tables 1 and 2 that a slurry composition having excellent dispersibility and a functional layer having excellent adhesiveness could be produced in Examples 1 to 22 in which the used binder composition contained a solvent and a polymer A including a nitrile group-containing monomer unit and a hydroxy group-containing monomer unit and in which the proportional content of nitrile group-containing monomer units in the polymer A and the hydroxy group/nitrile group molar ratio were within specific ranges. It can also be seen that an all-solid-state secondary battery could be caused to display excellent cell characteristics through the binder compositions of Examples 1 to 22.

Moreover, it can be seen from Tables 1 and 2 that adhesiveness of a functional layer and cycle characteristics of an all-solid-state secondary battery improved in Examples 4 and 21 in which the used binder composition contained both a polymer A having good solubility in the solvent and a polymer B having poor solubility in the solvent as compared to Examples 1 to 3, 6 to 20, and 22 in which the used binder composition only contained a polymer A having good solubility in the solvent.

Furthermore, it can be seen from Tables 1 and 2 that adhesiveness of a functional layer and cell characteristics of an all-solid-state secondary battery improved in Example 5 in which the used binder composition contained both a polymer A having good solubility in the solvent and a polymer A having poor solubility in the solvent as compared to Examples 1 to 3, 6 to 20, and 22 in which the used binder composition only contained a polymer A having good solubility in the solvent.

On the other hand, it can be seen from Table 3 that dispersibility of a slurry composition, adhesiveness of a functional layer, and cell characteristics of an all-solid-state secondary battery deteriorated in Comparative Example 1 in which the used binder composition contained a polymer that did not include a nitrile group-containing monomer unit and in Comparative Example 2 in which the used binder composition contained a polymer that had a proportional content of nitrile group-containing monomer units that was outside of a specific range.

Moreover, it can also be seen from Table 3 that dispersibility of a slurry composition, adhesiveness of a functional layer, and cell characteristics of an all-solid-state secondary battery deteriorated in Comparative Example 3 in which the used binder composition contained a polymer that had a proportional content of nitrile group-containing monomer units that was outside of a specific range and that did not include a hydroxy group-containing monomer unit.

Furthermore, it can also be seen from Table 3 that dispersibility of a slurry composition, adhesiveness of a functional layer, and cell characteristics of an all-solid-state secondary battery deteriorated in Comparative Examples 4 and 5 in which the used binder composition contained a polymer having a hydroxy group/nitrile group molar ratio that was outside of a specific range.

INDUSTRIAL APPLICABILITY

According to the present disclosure, it is possible to provide a binder composition for an all-solid-state secondary battery that is capable of producing a slurry composition for an all-solid-state secondary battery having excellent dispersibility and that can cause a functional layer for an all-solid-state secondary battery to display excellent adhesiveness.

Moreover, according to the present disclosure, it is possible to provide a slurry composition for an all-solid-state secondary battery that has excellent dispersibility and is capable of forming a functional layer for an all-solid-state secondary battery having excellent adhesiveness.

Furthermore, according to the present disclosure, it is possible to provide a functional layer for an all-solid-state secondary battery that has excellent adhesiveness and an all-solid-state secondary battery that includes this functional layer for an all-solid-state secondary battery.

**Claims**

1. A binder composition for an all-solid-state secondary battery comprising a binder and a solvent, wherein

    the binder includes a polymer A,
    the polymer A includes a nitrile group-containing monomer unit and a hydroxy group-containing monomer unit, and
    in the polymer A, proportional content of the nitrile group-containing monomer unit is not less than 3 mass% and not more than 30 mass%, and a molar ratio of proportional content of the hydroxy group-containing monomer unit relative to the proportional content of the nitrile group-containing monomer unit is not less than 0.01 and not more than 0.30.

2. The binder composition for an all-solid-state secondary battery according to claim 1, wherein the polymer A further includes a (meth)acrylic acid ester monomer unit in a proportion of not less than 25 mass% and not more than 95 mass%.

3. The binder composition for an all-solid-state secondary battery according to claim 1, wherein the solvent includes one or more selected from the group consisting of an aromatic hydrocarbon, a ketone, an ester, and an ether.

4. A slurry composition for an all-solid-state secondary battery comprising: functional particles; and the binder composition for an all-solid-state secondary battery according to claim 1.

5. The slurry composition for an all-solid-state secondary battery according to claim 4, wherein the functional particles are one or more selected from the group consisting of electrode active material particles, solid electrolyte particles, and conductive material particles.

6. A functional layer for an all-solid-state secondary battery formed using the slurry composition for an all-solid-state secondary battery according to claim 4 or 5.

7. An all-solid-state secondary battery comprising the functional layer for an all-solid-state secondary battery according to claim 6.

## INTERNATIONAL SEARCH REPORT

| | International application No. |
|---|---|
| | **PCT/JP2022/020568** |

**A. CLASSIFICATION OF SUBJECT MATTER**

*H01M 4/62*(2006.01)i; *H01M 4/13*(2010.01)i; *H01M 4/139*(2010.01)i; *H01M 10/0562*(2010.01)i; *H01M 10/0585*(2010.01)i
FI: H01M4/62 Z; H01M4/139; H01M10/0562; H01M4/13; H01M10/0585

According to International Patent Classification (IPC) or to both national classification and IPC

**B. FIELDS SEARCHED**

Minimum documentation searched (classification system followed by classification symbols)

H01M4/62; H01M4/13; H01M4/139; H01M10/0562; H01M10/0585

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/098009 A1 (FUJIFILM CORP.) 23 May 2019 (2019-05-23) | 1-7 |
| A | JP 2008-71624 A (NEC TOKIN CORP.) 27 March 2008 (2008-03-27) | 1-7 |
| A | WO 2018/034093 A1 (ZEON CORP.) 22 February 2018 (2018-02-22) | 1-7 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 June 2022** | **21 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/020568**

| Patent document cited in search report | | | Publication date (day/month/year) | Patent family member(s) | | | Publication date (day/month/year) |
|---|---|---|---|---|---|---|---|
| WO | 2019/098009 | A1 | 23 May 2019 | US | 2020/0235425 | A1 | |
| | | | | CN | 111406340 | A | |
| JP | 2008-71624 | A | 27 March 2008 | (Family: none) | | | |
| WO | 2018/034093 | A1 | 22 February 2018 | US | 2020/0052270 | A1 | |
| | | | | EP | 3503253 | A1 | |
| | | | | CN | 109565017 | A | |
| | | | | KR | 10-2019-0039932 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020203042 A1
- WO 2020045227 A1
- JP 2015088486 A
- WO 2012165120 A1
- WO 2013080989 A1
- JP 2013008485 A
- JP 2012243476 A
- JP 2013143299 A
- JP 2016143614 A

**Non-patent literature cited in the description**

- Hansen Solubility Parameters: A User's Handbook. CRC Press
- **CHARLES M. HANSEN.** Hansen Solubility Parameters: A User's Handbook